# EUROPEAN PATENT APPLICATION

(11) **EP 3 495 923 A1**
(43) Date of publication of application: **12.06.2019**
(21) Application number: 17836617.5
(22) Date of filing: 14.06.2017
(51) Int. Cl.: G06F 3/01, G06F 3/0481, G06F 3/0484, G06F 3/0488, G06F 3/023

(54) **INFORMATION PROCESSING DEVICE, INFORMATION PROCESSING METHOD, AND PROGRAM**

(30) Priority: 05.08.2016 JP 2016154937
(71) Applicant: Sony Corporation, Tokyo 108-0075 (JP)
(72) Inventor: YOKOYAMA, Ryo, Tokyo 108-0075 (JP); YAMANO, Ikuo, Tokyo 108-0075 (JP)
(74) Representative: MFG Patentanwälte Meyer-Wildhagen Meggle-Freund Gerhard PartG mbB
(86) International application number: PCT/JP2017/021967
(87) International publication number: WO 2018/025510

(57) **Abstract**

[Object] To enable a user to intuitively perceive the validity of an operation in input using a software keyboard.

[Solution] There is provided an information processing device including: an input processing unit that performs input processing on the basis of an input operation accompanied by character designation detected in a software keyboard; and a tactile signal processing unit that generates a control signal for controlling a tactile feedback based on the input operation. The input operation includes a flick operation. In addition, there is provided an information processing method including, by a processor: performing input processing on the basis of an input operation accompanied by character designation detected in a software keyboard; and generating a control signal for controlling a tactile feedback based on the input operation. The input operation includes a flick operation.

## Description

### Technical Field

The present disclosure relates to an information processing device, an information processing method, and a program.

### Background Art

In recent years, the number of terminals adopting a software keyboard (also referred to as an on-screen keyboard) instead of a hardware keyboard has been increasing in smartphones, tablets, Personal Computers (PC), car navigation systems, and the like.

In addition, many techniques for improving the efficiency of input of characters using a software keyboard have been developed. For example, Patent Literature 1 discloses an input device that controls input characters in accordance with pressing of an operation body.

### Citation List

### Patent Literature

- Patent Literature 1:: JP 2011-59821A

### Disclosure of Invention

### Technical Problem

However, the input device disclosed in Patent Literature 1 does not include means for causing a user to perceive the above-described pressing. For this reason, it is difficult for a user operating the input device disclosed in Patent Literature 1 to determine whether or not an input operation for obtaining a desired result has been performed correctly before confirming an actual input result.

In addition, unlike hardware keyboards, software keyboards lack a physical sensation when a key is pressed. For this reason, a user is required to look at a screen in order to confirm the position of a target key and the validity of an input operation.

Consequently, the present disclosure proposes a new and improved information processing device, information processing method, and program which allow a user to be capable of intuitively perceiving an operation in input using a software keyboard.

### Solution to Problem

According to the present disclosure, there is provided an information processing device including: an input processing unit that performs input processing on the basis of an input operation accompanied by character designation detected in a software keyboard; and a tactile signal processing unit that generates a control signal for controlling a tactile feedback based on the input operation. The input operation includes a flick operation.

In addition, according to the present disclosure, there is provided information processing including, by a processor: performing input processing on the basis of an input operation accompanied by character designation detected in a software keyboard; and generating a control signal for controlling a tactile feedback based on the input operation. The input operation includes a flick operation.

In addition, according to the present disclosure, there is provided a program causing a computer to function as an information processing device including an input processing unit that performs input processing on the basis of an input operation accompanied by character designation detected in a software keyboard, and a tactile signal processing unit that generates a control signal for controlling a tactile feedback based on the input operation. The input operation includes a flick operation.

### Advantageous Effects of Invention

As described above, according to the present disclosure, a user can intuitively perceive the validity of an operation in input using a software keyboard.

Note that the effects described above are not necessarily limitative. With or in the place of the above effects, there may be achieved any one of the effects described in this specification or other effects that may be grasped from this specification.

### Brief Description of Drawings

FIG. 1 is a functional block diagram of an information processing device 10 according to a first embodiment of the present disclosure.
FIG. 2 is a diagram illustrating a flick operation in a software keyboard according to the embodiment.
FIG. 3 is a diagram illustrating a tactile feedback based on a flick operation according to the embodiment.
FIG. 4 is a diagram illustrating a tactile feedback based on a difference between a determination value and a threshold value according to the embodiment.
FIG. 5 is a diagram illustrating prediction of termination of a force operation according to the embodiment.
FIG. 6 is a diagram illustrating a change of a character input mode based on an input strength according to the embodiment.
FIG. 7A is a diagram illustrating a change of an input character based on an input strength according to the embodiment.
FIG. 7B is a diagram illustrating a change of an input character based on an input strength according to the embodiment.
FIG. 8 is a diagram illustrating a change of an input processing speed based on an input strength according to the embodiment.
FIG. 9 is a diagram illustrating a tactile feedback at a boundary of a key array according to the embodiment.
FIG. 10 is a diagram illustrating another example of a tactile feedback based on the shape of a key array according to the embodiment.
FIG. 11 is a diagram illustrating a tactile feedback based on a basic position on a software keyboard according to the embodiment.
FIG. 12 is a diagram illustrating a tactile feedback based on a position on a key array according to the embodiment.
FIG. 13 is a flowchart illustrating a flow of processing performed by the information processing device 10 according to the present embodiment according to the embodiment.
FIG. 14 is a diagram illustrating an example of control of a display object and a tactile feedback based on a low input strength according to a second embodiment of the present disclosure.
FIG. 15A is a diagram illustrating an example of control of a display object and a tactile feedback based on a high input strength according to the embodiment.
FIG. 15B is a diagram illustrating deactivation of a display object based on a low input strength according to the embodiment.
FIG. 16A is an example of a user interface displayed on a display unit according to the embodiment.
FIG. 16B is an example of a user interface displayed on a display unit according to the embodiment according to the embodiment.
FIG. 16C is an example of a user interface displayed on a display unit according to the embodiment according to the embodiment.
FIG. 17A is a diagram illustrating a tactile feedback based on a change with time until an input strength exceeds a threshold value, according to the embodiment.
FIG. 17B is a diagram illustrating a tactile feedback based on a change with time until an input strength exceeds a threshold value, according to the embodiment.
FIG. 18 is a diagram illustrating a tactile feedback based on a difference between an input strength and a threshold value according to the embodiment.
FIG. 19A is a diagram illustrating the control of a selection range based on an input strength according to the embodiment.
FIG. 19B is a diagram illustrating the control of a selection range based on an input strength according to the embodiment.
FIG. 19C is a diagram illustrating the control of a selection range based on an input strength according to the embodiment.
FIG. 19D is a diagram illustrating the control of a selection range based on an input strength according to the embodiment.
FIG. 20 is a flowchart illustrating a flow of processing performed by the information processing device 10 according to the embodiment.
FIG. 21 is an example of a hardware configuration of an information processing device according to the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be given in the following order.
1. First embodiment
1.1. Example of functional configuration of information processing device 10
1.2. Example of tactile feedback based on input operation
1.3. Flow of processing performed by information processing device 10
2. Second embodiment
2.1. Outline of second embodiment
2.2. Control of display object and tactile feedback based on input strength
2.3. Flow of processing performed by information processing device 10
3. Example of hardware configuration
4. Summary

### <1. First embodiment>

### [1.1. Example of functional configuration of information processing device 10]

First, an example of a functional configuration of an information processing device 10 according to a first embodiment of the present disclosure will be described. One of features of the information processing device 10 according to the present embodiment is to present a tactile feedback based on an input operation detected in a software keyboard. The information processing device 10 according to the present embodiment may be, for example, a smartphone, a tablet, a PC, a car navigation system, or the like.

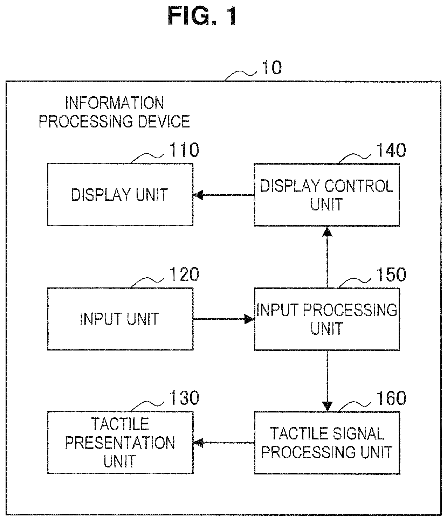

FIG. 1 is a functional block diagram of the information processing device 10 according to the present embodiment. Referring to FIG. 1, the information processing device 10 according to the present embodiment includes a display unit 110, an input unit 120, a tactile presentation unit 130, a display control unit 140, an input processing unit 150, and a tactile signal processing unit 160. Hereinafter, the above-described components will be described in detail focusing on features of the components.

### (Display unit 110)

The display unit 110 has a function of displaying various user interfaces provided by the information processing device 10. In the above-described user interface, various display objects including, for example, a software keyboard may be disposed. The above-described display objects include graphics to be operated such as a virtual button or a virtual dial, in addition to a software keyboard. The above-described function may be realized by, for example, a Cathode Ray Tube (CRT) display device, a Liquid Crystal Display (LCD) device, or an Organic Light Emitting Diode (OLED) device.

### (Input unit 120)

The input unit 120 has a function of detecting a user's input operation. Here, the above-described input operation may include a touch operation, a flick operation, a drag operation, a swipe operation, a touch operation, and the like which are performed by an input subject (for example, the user's finger or the like). In addition, the input unit 120 has a function of detecting an input strength, the position of an input subject, and the like according to the above-described input operation. Here, the above-described input strength may include, for example, pressing according to an input operation, a contact area between the input unit 120 and the input subject, and the like. The above-described function of the input unit 120 may be realized by, for example, a touch panel or a touch pad. Note that the input unit 120 may be formed integrally with the display unit 110.

### (Tactile presentation unit 130)

The tactile presentation unit 130 has a function of presenting a tactile feedback based on a user's input operation on the basis of a control signal generated by the tactile signal processing unit 160 to be described later. The above-described tactile feedback includes vibration generated by, for example, an eccentric motor, a linear vibrator, a piezoelectric element, or the like. In addition, the above-described tactile feedback may include electrical stimulation, thermal stimulation, and the like.

### (Display control unit 140)

The display control unit 140 has a function of controlling display on the display unit 110. The display control unit 140 according to the present embodiment controls various display objects including a software keyboard. In this case, the display control unit 140 according to the present embodiment can control the display of the display object on the basis of an input operation or an input strength according to an input operation. In addition, the display control unit 140 according to the present embodiment may control the color, size, or the like of a display object disposed in a user interface on the basis of the amount of movement of a detected input operation or an input strength.

### (Input processing unit 150)

The input processing unit 150 has a function of performing input processing on the basis of various input operations detected by the input unit 120. In particular, the input processing unit 150 according to the present embodiment may perform processing based on an input operation accompanied by character designation detected in a software keyboard. Details of the function of the input processing unit 150 according to the present embodiment will be described later.

### (Tactile signal processing unit 160)

The tactile signal processing unit 160 has a function of generating a control signal for controlling a tactile feedback based on an input operation. In this case, the tactile signal processing unit 160 may generate the above-described control signal on the basis of processing according to an input operation. Details of the function of the tactile signal processing unit 160 according to the present embodiment will be described later.

An example of a functional configuration of the information processing device 10 according to the present embodiment has been described above. Note that, in the above, a description has been given of an example of a case in which the information processing device 10 includes all of the display unit 110, the input unit 120, the tactile presentation unit 130, the display control unit 140, the input processing unit 150, and the tactile signal processing unit 160.

On the other hand, a configuration of the information processing device 10 according to the present embodiment is not limited to such an example. The above-described components may be realized by being distributed from a plurality of devices. For example, the function of the display unit 110 may be realized by another display device different from the information processing device 10. In this case, the above-described display device may be, for example, any of various displays, a smartphone, a tablet, a PC, a car navigation system, or the like.

In addition, for example, the function of the input unit 120 may be realized by another input device different from the information processing device 10. In this case, the above-described input device may be any of various devices including, for example, a touch panel or a touch pad.

In addition, for example, the function of the tactile presentation unit 130 may be realized by another tactile presentation device different from the information processing device 10. In this case, the above-described tactile presentation device may be, for example, any of various game controllers or a tactile presentation device such as a glove type, in addition to a smartphone, a tablet, a PC, and a car navigation system.

The information processing device 10 according to the present embodiment can exhibit various operational effects shown in the present disclosure by communicating with the above-described devices through a network. In addition, the information processing device 10 according to the present embodiment may further include components other than the components illustrated in FIG. 1. The information processing device 10 according to the present embodiment may include a communication unit communicating with, for example, a control unit controlling various applications and an external device. Components of the information processing device 10 according to the present embodiment may be flexibly deformed according to specifications and operations.

### [1.2. Example of tactile feedback based on input operation]

Next, an example of a tactile feedback based on an input operation according to the present embodiment will be described. As described above, the information processing device 10 according to the present embodiment has a function of presenting a tactile feedback based on various input operations. According to the above-described function of the information processing device 10 according to the present embodiment, a user can intuitively perceive a validity of an input operation even when the user is not looking at the display unit 110. Hereinafter, an example of a tactile feedback according to the present embodiment will be described in detail using a specific example.

### (Tactile feedback based on flick operation)

The information processing device 10 according to the present embodiment has a function of presenting a tactile feedback based on a flick operation. That is, the tactile signal processing unit 160 according to the present embodiment may generate a control signal for controlling a tactile feedback on the basis of a flick operation detected by the input unit 120.

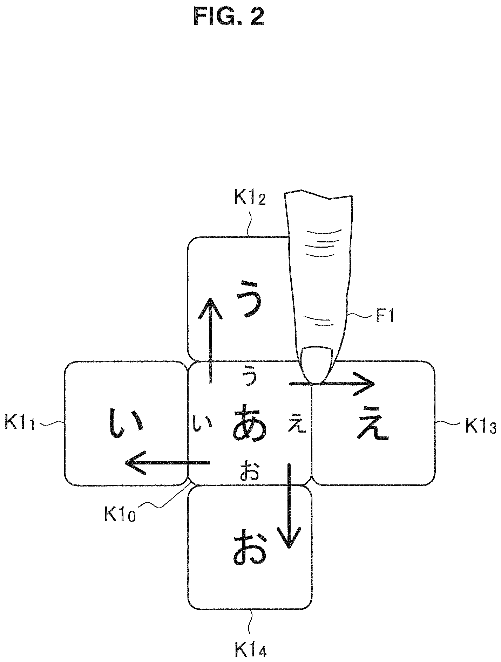

FIG. 2 is a diagram illustrating a flick operation in a software keyboard. FIG. 2 illustrates a shift of the state of a key changed according to a flick operation. In an example illustrated in FIG. 2, a key K1₀ in a basic state and keys K1₁ to K1₄ changed according to a flick operation performed on the key K1₀ are shown. In addition, an arrow in FIG. 2 indicates a direction of a flick operation performed by an input subject F1.

Referring to FIG. 2, the key K1₀ in a basic state is a key for inputting a character " 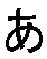 " and shifts to the key K1₁ for inputting a character " 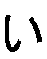 " by the input subject F1 performing a flick operation leftward. In addition, similarly, the key K1₀ shifts to the key K1₂ by being flicked upward, shifts to the key K1₃ by being flicked rightward, and shifts to the key K1₄ by being flicked downward.

In this manner, in a software keyboard, it is possible to input characters with a configuration of a smaller number of keys by switching an input character based on a flick operation. However, a software keyboard has poor operability due to lack of a physical sensation at the time of pressing a key or flicking, and a user is required to perform an input operation while confirming the position of a key and a necessary amount of flicking. In addition, a software keyboard lacks the above-described physical sensation, and thus it is difficult for a user to notice an erroneous input before confirming a displayed input result.

In order to cope with the above-described points, the information processing device 10 according to the present embodiment can present a tactile feedback based on a flick operation of an input subject. According to the above-described function of the information processing device 10 according to the present embodiment, a user can intuitively perceive the validity of an input operation in character designation according to a flick operation.

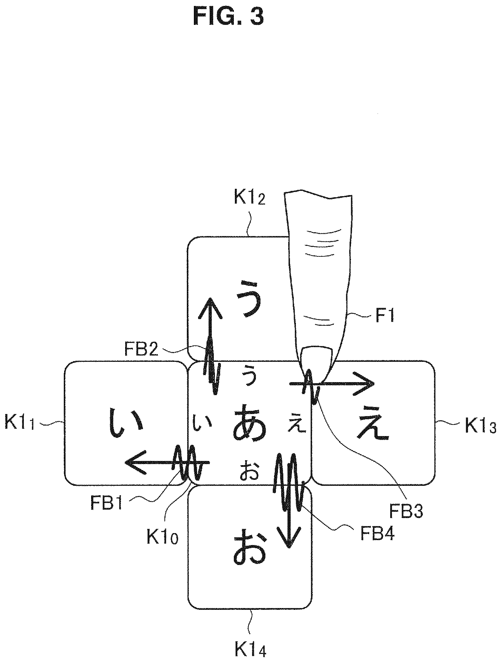

FIG. 3 is a diagram illustrating a tactile feedback based on a flick operation according to the present embodiment. Similarly to FIG. 2, FIG. 3 illustrates a key K1₀ in a basic state and keys K1₁ to K1₄ changed according to a flick operation performed on the key K1₀. In addition, FIG. 3 illustrates arrows indicating flick operations and tactile feedbacks FB1 to FB4 based on the flick operations.

As illustrated in FIG. 3, the tactile presentation unit 130 according to the present embodiment can present a corresponding tactile feedback on the basis of a detected flick operation. In this case, the tactile signal processing unit 160 generates a control signal for controlling a tactile feedback based on a flick operation detected by the input unit 120.

For example, the tactile signal processing unit 160 according to the present embodiment may generate a control signal for controlling the corresponding tactile feedback FB1 on the basis of the key K1₀ being flicked leftward. Similarly, the tactile signal processing unit 160 may generate a control signal for controlling the corresponding tactile feedback FB2 on the basis of the key K1₀ being flicked upward and a control signal for controlling the corresponding tactile feedback FB3 on the basis of the key K1₀ being flicked rightward. In addition, the tactile signal processing unit 160 may generate a control signal for controlling the corresponding tactile feedback FB4 on the basis of the key K1₀ being flicked downward.

Further, in this case, the tactile signal processing unit 160 according to the present embodiment may generate the above-described control signal on the basis of a designated character being changed according to a flick operation. The tactile signal processing unit 160 generates a control signal at the above-described timing, so that a user can perceive that a designated character to be input according to a flick operation has been switched to.

In addition, the tactile signal processing unit 160 according to the present embodiment can also generate the above-described control signal on the basis of a determination value, detected from the flick operation, exceeding a threshold value. Here, the above-described determination value may include the amount of movement of a flick operation, the speed of a flick operation, and the like. That is, the tactile signal processing unit 160 according to the present embodiment may generate a control signal on the basis of the amount of movement of a flick operation exceeding a threshold value, or may generate a control signal on the basis of the speed of a flick operation exceeding a threshold value. The tactile signal processing unit 160 generates a control signal based on the above-described determination value, so that a user can intuitively perceive that the amount of operation necessary for character designation has been fulfilled.

In addition, the tactile signal processing unit 160 according to the present embodiment may generate a control signal based on the magnitude of the above-described determination value. The tactile signal processing unit 160 can control, for example, the magnitude and frequency of a tactile feedback in accordance with the magnitude of the above-described determination value. The tactile signal processing unit 160 may generate a control signal for controlling a tactile feedback having a small vibration and a tactile feedback having a low frequency in a case in which the determination value is small, or may generate a control signal for controlling a tactile feedback having a large vibration and tactile feedback having a high frequency in a case in which the determination value is large.

According to the above-described function of the tactile signal processing unit 160 according to the present embodiment, it is possible to present a flexible tactile feedback according to a user's flick operation, and the user can perform a more intuitive input operation.

In addition, the tactile signal processing unit 160 according to the present embodiment may generate a control signal for controlling a tactile feedback according to a direction of a flick operation as illustrated in FIG. 3. Referring to FIG. 3, it can be seen that different tactile feedbacks FB1 to FB4 are presented in accordance with directions of flick operations indicated by arrows. Here, the tactile feedbacks FB1 to FB4 may be realized as tactile feedbacks having different magnitudes and frequencies. The tactile signal processing unit 160 according to the present embodiment generates a control signal according to a direction of a flick operation, so that a user can intuitively perceive whether or not the flick operation has been performed in a desired direction.

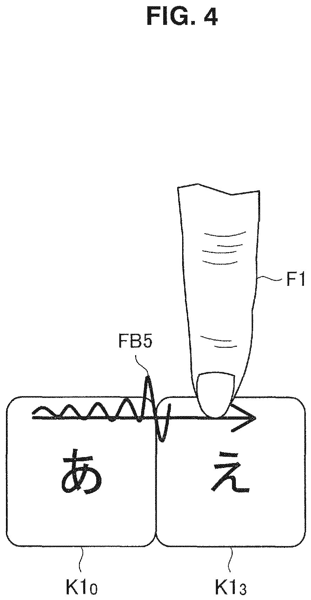

In addition, the tactile signal processing unit 160 according to the present embodiment may generate a control signal according to a difference between the above-described determination value and a threshold value. FIG. 4 is a diagram illustrating a tactile feedback according to a difference between a determination value and a threshold value according to the present embodiment. FIG. 4 illustrates a tactile feedback FB5 presented in a case in which a key K1₀ is flicked rightward and shifts to a key K1_{3.} Referring to FIG. 4, it can be seen that the tactile feedback FB5 fluctuates in accordance with the amount of flicking and is maximized when the key K1₀ shifts to the key K1₃.

In this manner, the tactile signal processing unit 160 according to the present embodiment may generate a control signal so that the control signal becomes larger as the control signal approaches the above-described threshold value or a boundary of a key. Note that the magnitude of the tactile feedback FB5 may be controlled in accordance with the strength of vibration and the degree of frequency as described above. According to the above-described function of the tactile signal processing unit 160 according to the present embodiment, a user can intuitively perceive the amount of flicking necessary for a shift of a key.

### (Tactile feedback based on input strength)

Next, a tactile feedback based on an input strength according to the present embodiment will be described. Although an example of a tactile feedback based on a flick operation according to the present embodiment has been described above, the tactile signal processing unit 160 according to the present embodiment can also generate a control signal on the basis of an input strength according to an input operation. Here, an input strength according to the present embodiment may be a strength based on at least any one of pressing according to an input operation or a contact area between the input unit 120 and an input subject.

The tactile signal processing unit 160 according to the present embodiment may generate a control signal on the basis of, for example, the above-described input strength being less than a threshold value. Specifically, the tactile signal processing unit 160 according to the present embodiment can generate a control signal by predicting separation of the input subject F1 from the input unit 120, that is, termination of an input operation on the basis of an input strength being less than the threshold value.

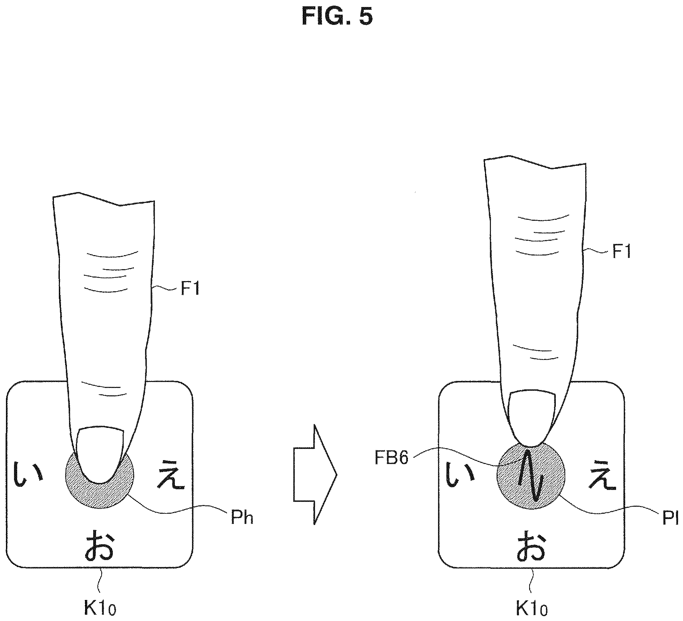

FIG. 5 is a diagram illustrating prediction of termination of an input operation according to the present embodiment. FIG. 5 illustrates two states having different input strengths. An example in which a key K1₀ is operated with a high input strength Ph is shown on the left side, and an example in which the key K1₀ is operated with a low input strength Pl is shown on the right side.

In this case, the tactile signal processing unit 160 according to the present embodiment may generate a control signal for controlling a tactile feedback FB6 on the basis of a change from the above-described high input strength Ph to the low input strength Pl as illustrated in FIG. 5. That is, the tactile signal processing unit 160 according to the present embodiment can predict separation of the input subject F1 from the input unit 120, that is, termination of an input operation on the basis of an input strength according to an input operation being less than a threshold value.

According to the above-described function of the tactile signal processing unit 160 according to the present embodiment, it is possible to present a tactile feedback before the input subject F1 is completely separated from the input unit 120, and a user can reliably receive a tactile feedback.

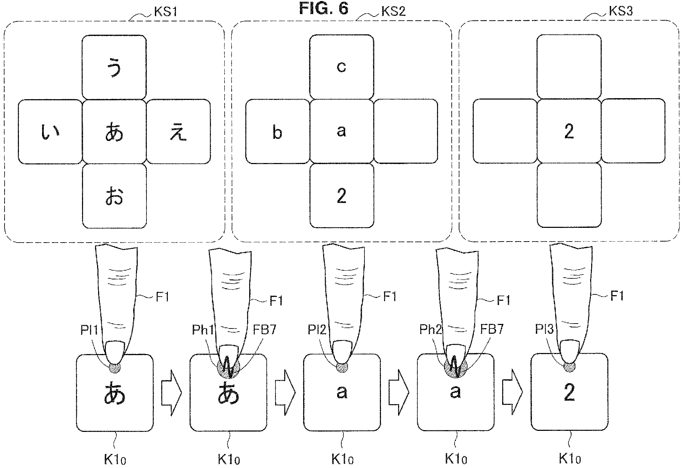

In addition, the tactile signal processing unit 160 according to the present embodiment may generate a control signal on the basis of an input strength exceeding a threshold value. In addition, the input processing unit 150 according to the present embodiment can also change a character input mode according to an input operation on the basis of an input strength. FIG. 6 is a diagram illustrating a change of a character input mode based on an input strength according to the present embodiment.

In a lower portion of FIG. 6, changes in an input strength according to an input operation performed on a key K1₀ are shown in time series. Further, in an upper portion of FIG. 6, a character input mode changed on the basis of an input strength according to the above-described input operation is shown. Here, the above-described character input mode may be, for example, a set of character types input according to an input operation as illustrated in FIG. 6. That is, the input processing unit 150 according to the present embodiment can change a set of character types to be input, on the basis of an input strength.

In an example illustrated in FIG. 6, first, an input subject F1 operates a key K1₀ with a low input strength Pl1. In this case, the input processing unit 150 sets a set of character types as KS1. Next, the input subject F1 operates the key K1₀ with a high input strength Ph1. In this case, the tactile signal processing unit 160 according to the present embodiment may generate a control signal for controlling a tactile feedback FB7 on the basis of an input strength exceeding a threshold value. In addition, the input processing unit 150 may also change a set of character types from KS1 to KS2 on the basis of an input strength exceeding a threshold value.

Further, in an example illustrated in FIG. 6, the input subject F1 subsequently operates the key K1₀ with a low input strength Pl2, and a set of character types set in this case may be KS2. On the other hand, when the input subject F1 operates the key K1₀ with a high input strength Ph2, the tactile signal processing unit 160 generates a control signal for controlling the tactile feedback FB7 again, and the input processing unit 150 changes a set of character types from KS2 to KS3.

In this manner, the tactile signal processing unit 160 according to the present embodiment can generate a control signal on the basis of an input strength exceeding a threshold value. In addition, the input processing unit 150 according to the present embodiment can change a set of character types to be input, on the basis of an input strength exceeding a threshold value. According to the above-described function of the tactile signal processing unit 160 and the input processing unit 150, it is possible to change a character input mode according to a simple operation and to greatly improve the efficiency of character input using a software keyboard.

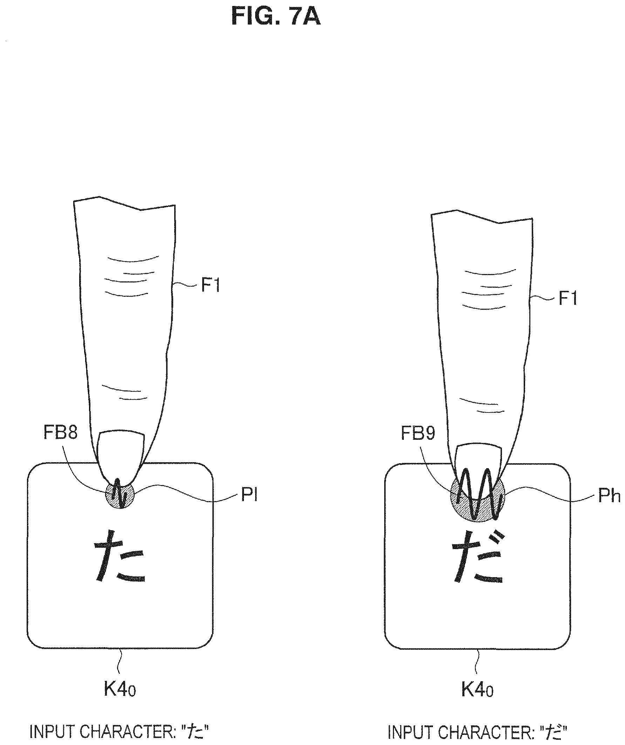

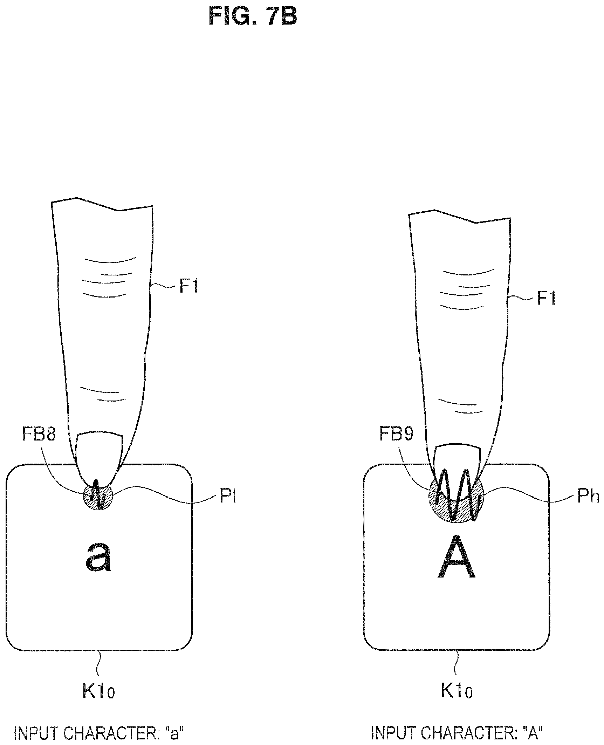

In addition, the input processing unit 150 according to the present embodiment may change an input character to be input, on the basis of an input strength. FIGS. 7A and 7B are diagrams illustrating a change of an input character based on an input strength according to the present embodiment.

FIG. 7A is a diagram illustrating a tap operation performed on a key K4₀ by an input subject F1. Referring to FIG. 7A, an example of a touch operation based on a low input strength Pl is shown on the left side of FIG. 7A. In this case, the input processing unit 150 may output a basic character " 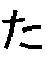 " set in the key K4o. Further, in this case, the tactile signal processing unit 160 generates a control signal for controlling a tactile feedback F8 corresponding to a low input strength Pl.

On the other hand, an example of a touch operation based on a high input strength Ph is shown on the right side of FIG. 7A. In this case, the input processing unit 150 may change an input character on the basis of an input strength exceeding a threshold value. In an example illustrated in FIG. 7A, the input processing unit 150 outputs an input character " 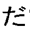 " deriving from the basic character " 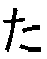 " set in the key K4o, on the basis of an input strength exceeding a threshold value. Further, in this case, the tactile signal processing unit 160 generates a control signal for controlling a tactile feedback F9 corresponding to a high input strength Ph.

Subsequently, another example according to a change of an input character based on an input strength will be described with reference to FIG. 7B. FIG. 7B is a diagram illustrating a tap operation performed on a key K1₀ by an input subject F1. Referring to FIG. 7B, an example of a tap operation based on a low input strength Pl is shown on the left side of FIG. 7B. In this case, the input processing unit 150 may output a basic character "a" set in the key K1_{0.} Further, in this case, the tactile signal processing unit 160 generates a control signal for controlling a tactile feedback F8 corresponding to a low input strength Pl.

On the other hand, an example of a touch operation based on a high input strength Ph is shown on the right side of FIG. 7B. In this case, the input processing unit 150 may change an input character on the basis of an input strength exceeding a threshold value. In an example illustrated in FIG. 7B, the input processing unit 150 outputs an input character "A" deriving from the basic character "a" set in the key K1₀, on the basis of an input strength exceeding a threshold value. Further, in this case, the tactile signal processing unit 160 generates a control signal for controlling a tactile feedback F9 corresponding to a high input strength Ph.

As described above using FIGS. 7A and 7B, the input processing unit 150 according to the present embodiment can change an input character on the basis of an input strength. According to the above-described function of the input processing unit 150 according to the present embodiment, it is possible to change an input character according to a simple operation and to further improve the efficiency of input of a character using a software keyboard.

Next, a change of an input processing speed based on an input strength according to the present embodiment will be described. The input processing unit 150 according to the present embodiment can change an input processing speed based on an input operation in accordance with an input strength. In addition, the tactile signal processing unit 160 according to the present embodiment can generate a control signal based on the above-described input processing speed.

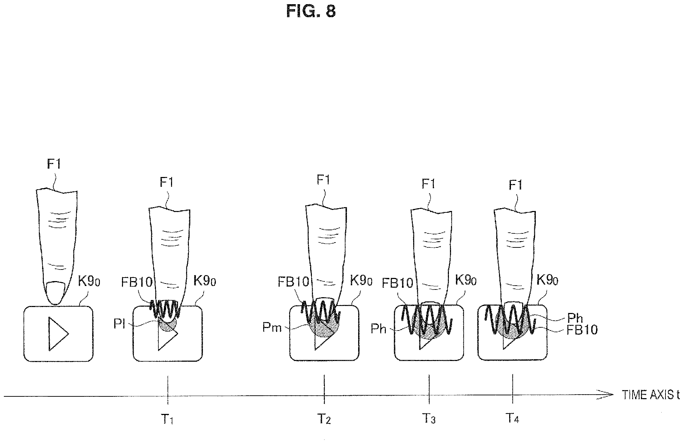

FIG. 8 is a diagram illustrating a change of an input processing speed based on an input strength according to the present embodiment. In FIG. 8, changes in an input strength according to an input operation of an input subject F1 which is performed on a key K9₀ are shown along a time axis t. Here, the key K9₀ may be, for example, a key for moving a cursor according to input of a character forward by one character. In addition, the input operation of the input subject F1 illustrated in FIG. 8 may be a long-pressing operation with respect to the key K9₀.

Referring to FIG. 8, an input operation performed on K9₀ by the input subject F1 is started at time T₁. In this case, the input operation of the input subject F1 at time T₁ is performed with a low input strength Pl. Here, at time T₁, the input processing unit 150 performs input processing for moving a cursor according to input of a character forward by one character, on the basis of the input operation of the input subject F1.

At the subsequent time T₂, it is indicated that an input operation of the input subject F1 is performed with an intermediate input strength Pm, and an input strength according to a long-pressing operation of the input subject F1 is increased. In this case, the input processing unit 150 performs input processing for moving a cursor according to input of a character forward by one character, on the basis of the input operation of the input subject F1.

Referring to the subsequent time T₃, it is indicated that an input operation of the input subject F1 is performed with a high input strength Ph, and an input strength according to a long-pressing operation of the input subject F1 is further increased from time T₂. In this case, the input processing unit 150 performs input processing for moving a cursor according to input of a character forward by one character, on the basis of the input operation of the input subject F1.

In addition, at the subsequent time T₄, it is indicated that an input operation of the input subject F1 is continuously performed with a high input strength Ph, and an input strength according to a long-pressing operation of the input subject F1 is continued from time T₃. In this case, the input processing unit 150 performs input processing for moving a cursor according to input of a character forward by one character, on the basis of the input operation of the input subject F1.

Here, focusing on an interval between times at times T₁ to T₄, it can be seen that the interval becomes shorter as time elapses. That is, in an example illustrated in FIG. 8, it can be seen that a relationship of an interval between T₁ and T₂>an interval between T₂ and T₃>an interval between T₃ and T₄ is established. In this manner, the input processing unit 150 according to the present embodiment can increase an input processing speed according to an input operation as an input strength becomes higher. Further, in this case, an interval Tₙ-Tₙ₋₁ to the next input processing may be determined according to Tₙ-Tₙ₋₁=a/(b^{∗}P+1)+c. Here, P in the above-described expression may be a value indicating an input strength. In addition, a, b, and c in the above-described expression may be any constant.

In addition, referring to FIG. 8, the tactile signal processing unit 160 according to the present embodiment generates a control signal for controlling a tactile feedback FB10 at each time when input processing is performed. In this manner, the tactile signal processing unit 160 according to the present embodiment can generate a control signal in accordance with input processing based on an input strength. Further, in this case, the tactile signal processing unit 160 may generate a control signal for controlling the tactile feedback FB10 according to an input strength or an input processing speed.

A change of an input processing speed based on an input strength according to the present embodiment has been described above. According to the above-described function of the input processing unit 150 according to the present embodiment, a user can adjust the speed of continuous input by an intuitive operation, and it is possible to greatly improve the efficiency of input of a character in a software keyboard.

Further, in a case in which the tactile presentation unit 130 according to the present embodiment includes an eccentric motor, it is possible to present tactile feedbacks at the time of input processing independently of each other even when the input processing is continuously performed at high speed. For this reason, the user can accurately ascertain a timing of input processing accompanied by continuous input, and it is possible to further improve the efficiency of input of a character.

Note that, although an example of a case in which input processing for changing the position of a cursor is performed has been described above with reference to FIG. 8, processing of continuous input according to the present embodiment is not limited to such an example. The processing of continuous input according to the present embodiment may also be similarly applied to, for example, continuous input of a character or continuous processing of deletion.

In addition, although a case in which an interval Tₙ-Tₙ₋₁ to the next input processing is continuously changed in accordance with an input strength has been described above, the interval Tₙ-Tₙ₋₁ may be changed in a stepwise manner on the basis of a threshold value of an input strength.

### (Tactile feedback based on shape of display of software keyboard)

Next, a tactile feedback based on the shape of display of a software keyboard according to the present embodiment will be described. The tactile signal processing unit 160 according to the present embodiment can generate a control signal for controlling a tactile feedback based on the shape of display of a software keyboard.

For example, the tactile signal processing unit 160 according to the present embodiment may generate a control signal for controlling a tactile feedback based on the shape of a key array of a software keyboard. In this case, the tactile signal processing unit 160 may generate a control signal for controlling a tactile feedback at the boundary of the above-described key array.

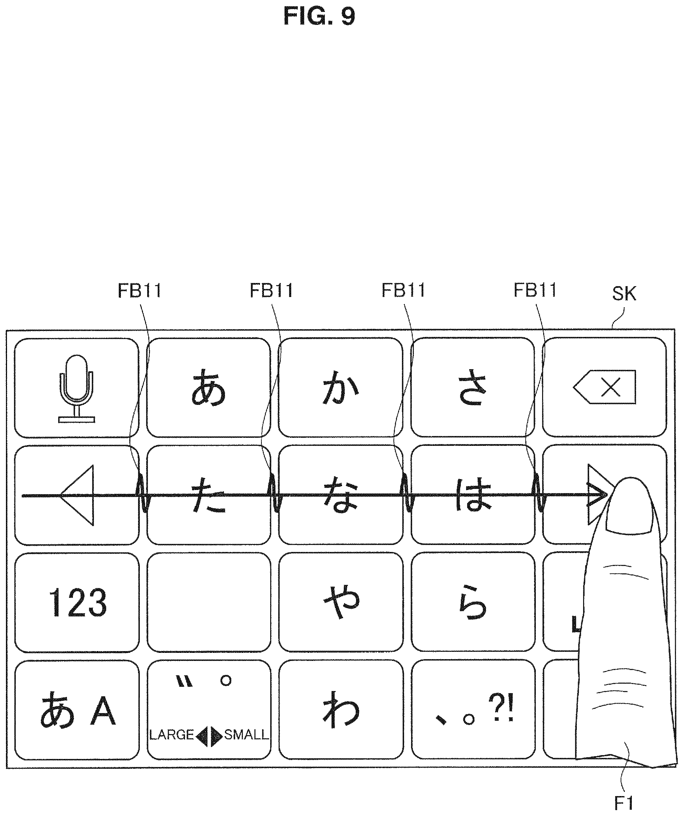

FIG. 9 is a diagram illustrating a tactile feedback at a boundary of a key array. FIG. 9 illustrates a software keyboard SK and an input operation of an input subject F1 which is performed on the software keyboard SK. Referring to FIG. 9, it can be seen that the input subject F1 performs a swipe operation from the left side to the right side of the software keyboard SK.

In this case, the tactile signal processing unit 160 according to the present embodiment may generate a control signal for controlling a tactile feedback FB11 when the input subject F1 approaches the boundary of the key array of the software keyboard SK. More specifically, the tactile signal processing unit 160 according to the present embodiment can generate a control signal for controlling a tactile feedback based on the position of the boundary on the basis of the fact that a difference between the position of the input subject F1 detected and the position of the boundary of the key array is less than a threshold value.

According to the above-described function of the tactile signal processing unit 160 according to the present embodiment, a user can intuitively perceive the shape of a key array of a software keyboard even when the user does not gaze at the display unit 110, and it is possible to greatly improve operability according to the input of a character.

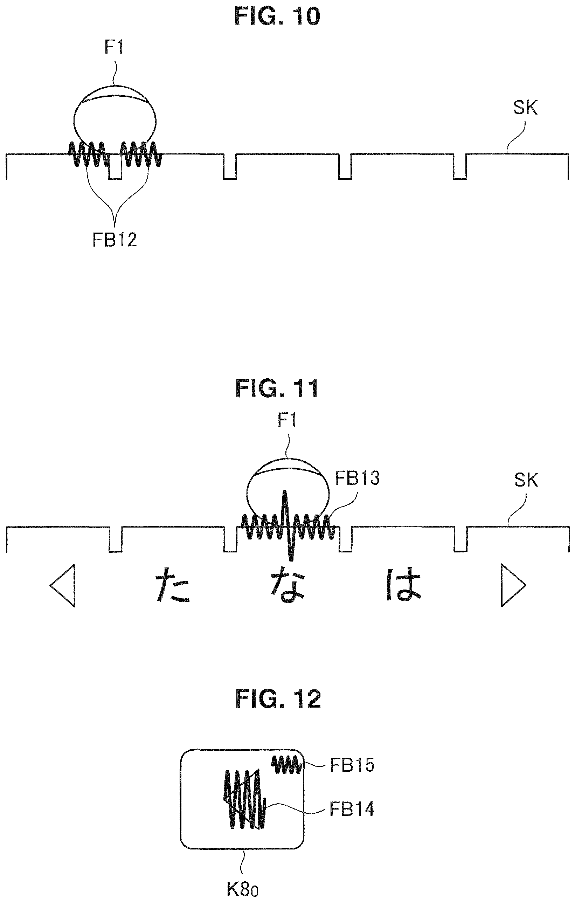

In addition, FIG. 10 is a diagram illustrating another example of a tactile feedback based on the shape of a key array according to the present embodiment. In the description using FIG. 9, a tactile feedback when the input subject F1 performs a swipe operation has been described. On the other hand, a tactile feedback at a boundary of a key array according to the present embodiment can be presented even in a case of an operation not accompanied by a change in the position of an input subject.

FIG. 10 illustrates a software keyboard SK and an input operation of an input subject F1 which is performed on the software keyboard SK. Here, the input operation in FIG. 10 may be a touch operation or the like not accompanied by a change in a position, unlike the example of FIG. 9.

In this case, the tactile signal processing unit 160 according to the present embodiment may generate a control signal for controlling a tactile feedback F12 at a position where the input subject F1 is not in contact with the key array, unlike the example of FIG. 9. Referring to FIG. 10, it can be seen that the tactile feedback F12 is presented only at a position where the boundary of the key array is excluded and a position where the input subject F1 is in contact with the key array.

According to the above-described function of the tactile signal processing unit 160 according to the present embodiment, a user can intuitively perceive the shape of a key array of a software keyboard even when an input operation not accompanied by a change in a position is performed, and it is possible to further improve operability according to the input of a character.

In addition, the tactile signal processing unit 160 according to the present embodiment can also generate a control signal for controlling a tactile feedback based on a basic position on a software keyboard. More specifically, the tactile signal processing unit 160 according to the present embodiment may generate a control signal for controlling a tactile feedback based on the above-described basic position on the basis of the fact that a difference between the position of a detected input operation and a basic position in the software keyboard is less than a threshold value. Note that the above-described basic position may be, for example, a position corresponding to a home key in the software keyboard, a center position in the software keyboard, or the like.

FIG. 11 is a diagram illustrating a tactile feedback based on a basic position on a software keyboard according to the present embodiment. FIG. 11 illustrates a software keyboard SK and an input operation of an input subject F1 which is performed on the software keyboard SK. Here, the input operation in FIG. 11 may be a swipe operation, may be a touch operation not accompanied by a change in a position, or the like.

Referring to FIG. 11, it can be seen that a tactile feedback F13 is presented on a home key in the software keyboard SK. In this manner, the tactile signal processing unit 160 according to the present embodiment can generate a control signal for controlling the tactile feedback F13 when the input subject F1 approaches a basic position in the software keyboard SK.

According to the above-described function of the tactile signal processing unit 160 according to the present embodiment, a user can intuitively ascertain the position of the input subject F1 in the software keyboard even when the user does not gaze at the display unit 110, and it is possible to further improve the efficiency of input of a character.

In addition, the tactile signal processing unit 160 according to the present embodiment may generate a control signal for controlling a tactile feedback based on a position on a key array. More specifically, the tactile signal processing unit 160 according to the present embodiment may generate a control signal for controlling a tactile feedback based on the position of an input operation on the key array.

FIG. 12 is a diagram illustrating a tactile feedback based on a position on a key array according to the present embodiment. FIG. 12 illustrates a key K8₀ in a software keyboard. Here, the tactile signal processing unit 160 according to the present embodiment can generate a control signal for controlling a tactile feedback different depending on the position of an input subject (not shown) of the key K8₀.

Referring to FIG. 12, it can be seen that a tactile feedback FB14 is presented at the center position of a key K8₀ (or a position according to display indicating the type of key) and the tactile feedback FB14 is presented at a side edge portion in the key K8₀. In this manner, the tactile signal processing unit 160 according to the present embodiment can generate a control signal for controlling a tactile feedback based on the position of an input subject on a key array.

Further, the tactile signal processing unit 160 according to the present embodiment can also perform control so that the strength and frequency of the tactile feedbacks FB14 and F15 vary depending on a key array. According to the above-described function of the tactile signal processing unit 160 according to the present embodiment, a user can intuitively perceive the type of a key array contacting an input subject and the position of the input subject in the key array even when the user does not gaze at the display unit 110, and it is possible to further improve the efficiency of input of a character.

### [1.3. Flow of processing performed by information processing device 10]

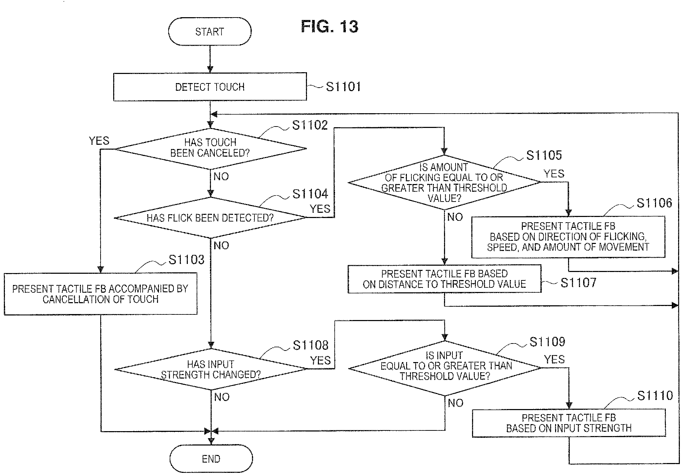

Next, a flow of processing performed by the information processing device 10 according to the present embodiment will be described. FIG. 13 is a flowchart illustrating a flow of processing performed by the information processing device 10 according to the present embodiment.

Referring to FIG. 13, first, the input unit 120 of the information processing device 10 according to the present embodiment detects a touch operation of an input subject (S1101).

Next, the input processing unit 150 according to the present embodiment determines whether or not the touch operation detected in step S1101 has been canceled (S1102). That is, the input processing unit 150 may determine whether or not an input operation performed by an input subject has been terminated.

Here, in a case in which the input processing unit 150 determines that the input operation has been terminated (S1102: YES), the tactile signal processing unit 160 according to the present embodiment generates a control signal for controlling a tactile feedback based on the cancellation of the touch, that is, the termination of the input operation. In addition, the tactile presentation unit 130 according to the present embodiment presents the tactile feedback on the basis of the control signal generated above (S1103).

After the process of step S1103 is completed, the information processing device 10 terminates a series of processes according to the presentation of the tactile feedback.

On the other hand, in a case in which the input processing unit 150 determines that the input operation has not been terminated (S1102: NO), the input processing unit 150 subsequently determines whether or not a flick operation performed by an input subject has been detected (S1104).

Here, in a case in which the input processing unit 150 determines that a flick operation has been detected (S1104: YES), the input processing unit 150 subsequently determines whether or not the amount of flicking of the detected flick operation is equal to or greater than a threshold value (S1105).

Here, in a case in which the input processing unit 150 determines that the amount of flicking of the detected flick operation is equal to or greater than the threshold value (S1105: YES), the tactile signal processing unit 160 according to the present embodiment generates a control signal for controlling a tactile feedback based on the detected flick operation. Further, in this case, the tactile signal processing unit 160 can generate a control signal based on the amount of movement, speed, direction, and the like of the flick operation. In addition, the tactile presentation unit 130 according to the present embodiment presents the tactile feedback on the basis of the control signal generated above (S1106).

On the other hand, in a case in which the input processing unit 150 determines that the amount of flicking of the detected flick operation is less than the threshold value (S1105: NO), the tactile signal processing unit 160 according to the present embodiment generates a control signal for controlling a tactile feedback based on a distance to the above-described threshold value. In addition, the tactile presentation unit 130 according to the present embodiment presents a tactile feedback on the basis of the control signal generated above (S1107).

Note that the information processing device 10 according to the present embodiment returns to step S1102 after the process of step S1106 or S1107 is terminated, and the subsequent processes may be repeatedly executed.

On the other hand, in a case in which the input processing unit 150 determines that a flick operation of an input subject has not been detected (S1104: NO), the input processing unit 150 subsequently determines whether or not an input strength according to the touch operation detected in step S1101 has changed (S1108).

Here, in a case in which the input processing unit 150 determines that an input strength according to the touch operation detected in step S1101 has not changed (S1108: NO), the information processing device 10 terminates a series of processes according to the presentation of the tactile feedback.

On the other hand, in a case in which the input processing unit 150 determines that an input strength according to the touch operation detected in step S1101 has changed (S1108: YES), the input processing unit 150 subsequently determines whether or not the detected input strength exceeds a threshold value (S1109).

Here, in a case in which the input processing unit 150 determines that the detected input strength is less than the threshold value (S1109: NO), the information processing device 10 terminates a series of processes according to the presentation of the tactile feedback.

On the other hand, in a case in which the input processing unit 150 determines that the detected input strength is equal to or greater than the threshold value (S1109: YES), the tactile signal processing unit 160 according to the present embodiment generates a control signal for controlling a tactile feedback based on the detected input strength. In this case, the tactile signal processing unit 160 can generate a control signal based on the degree of the detected input strength, the speed of a change, and the like. In addition, the tactile presentation unit 130 according to the present embodiment presents a tactile feedback on the basis of the control signal generated above (S1110).

Note that the information processing device 10 according to the present embodiment returns to step S1102 after the process of step S1110 is terminated, and the subsequent processes may be repeatedly executed.

### <2. Second embodiment>

### [2.1. Outline of second embodiment]

Next, an outline of a second embodiment according to the present disclosure will be described. In the above-described first embodiment, features of the information processing device 10 improving the efficiency of an input operation in a software keyboard have been mainly described. On the other hand, an information processing device 10 according to the second embodiment of the present disclosure can improve the efficiency of an input operation with respect to various display objects other than a software keyboard.

In recent years, many devices detecting an input operation for a display object disposed in an interface and executing various processes have been developed. However, in the above-described devices, input processing is often executed on the basis of a simple touch operation for a display object. For this reason, input processing is executed even when a user unintentionally touches an input unit such as a touch panel, which results in an erroneous operation.

Further, in the above-described devices, when an input subject touches a display object due to a flick, a swipe, a drag operation, or the like from another region (for example, a region in which another display object or a display object is not disposed), it is often not determined to be an input operation for the display object. For this reason, a user needs to temporarily separate an input subject from an input unit in order to operate a target display object. In addition, it is difficult to ascertain the position of the target display object by touch, and operability is lacking.

Further, a display object in the above-described device lacks a physical sense at the time of operation, unlike a button, a dial, and the like provided as hardware. For this reason, it is difficult for a user to obtain the real feeling of operating the display object.

The information processing device 10 according to the second embodiment of the present disclosure is conceived focusing on the above-described points and realizes a more intuitive input operation for a display object. In addition, the information processing device 10 according to the present embodiment can prevent a user's unintended erroneous operation by controlling a display object on the basis of an input strength according to an input operation. Here, the above-described input strength may be a strength based on at least any one of pressing according to an input operation or a contact area between the input unit 120 and an input subject as described above.

Hereinafter, a function of the information processing device 10 according to the present embodiment and effects exhibited by the function will be described in detail. Note that differences from the first embodiment will be mainly described in the following second embodiment according to the present disclosure, and configurations, functions, and effects in common with the first embodiment will not be described.

### [2.2. Control of display object and tactile feedback based on input strength]

First, the control of a display object and a tactile feedback based on an input strength according to the present embodiment will be described. The display control unit 140 according to the present embodiment has a function of controlling a display object disposed in a user interface on the basis of an input strength according to an input operation. In particular, the display control unit 140 according to the present embodiment may control effectiveness of a display object on the basis of an input strength.

More specifically, the display control unit 140 according to the present embodiment has a function of activating a display object on the basis of an input strength exceeding a threshold value. In addition, the display control unit 140 according to the present embodiment has a function of deactivating a display object on the basis of an input strength being less than the threshold value. Note that, as described above, the above-described display objects may include graphics to be operated such as a virtual button, a virtual dial, and a software keyboard.

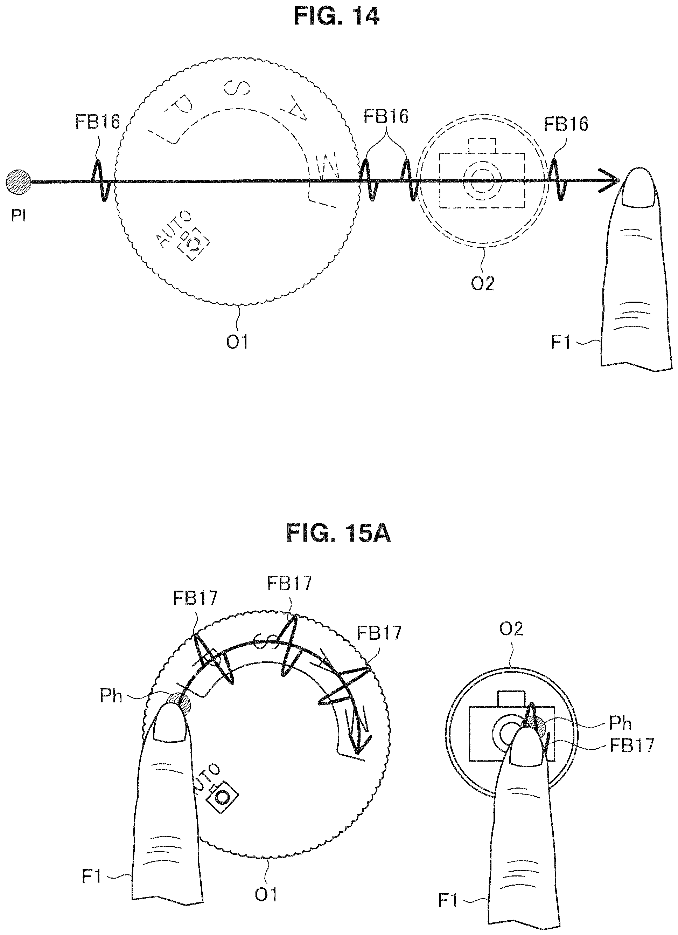

FIG. 14 is a diagram illustrating an example of the control of a display object and a tactile feedback based on a low input strength according to the present embodiment. FIG. 14 illustrates two display objects O1 and O2 and an input subject F1. In addition, referring to FIG. 14, it can be seen that the input subject F1 swipes the input unit 120 rightward with a low input strength Pl. In this case, the input subject F1 passes through the display objects O1 and O2. Note that, here, the display object may be a virtual dial for designating an imaging mode of a camera application, and the display object O2 may be a virtual shutter button for capturing a photo.

As illustrated in FIG. 14, the display control unit 140 according to the present embodiment may deactivate the display objects O1 and O2 on the basis of an input strength of the input subject F being less than a threshold value. In an example illustrated in FIG. 14, the display objects O1 and O2 deactivated by the display control unit 140 are indicated by a dotted line. In this manner, the display control unit 140 according to the present embodiment deactivates a display object on the basis of an input strength, so that it is possible to prevent a user's unintended erroneous operation.

Further, in an example illustrated in FIG. 14, the deactivated display objects O1 and O2 are indicated by a dotted line, but the display control unit 140 according to the present embodiment may make a display object translucent or transparent on the basis of an input strength being less than a threshold value. The display control unit 140 according to the present embodiment performs the above-described processing, and thus it is possible to intuitively perceive effectiveness of a display object. In addition, as will be described later, it is possible to minimize display elements on an application and to improve the efficiency of a user's input operation.

In addition, the tactile signal processing unit 160 according to the present embodiment has a function of generating a control signal for controlling a tactile feedback based on the position of a boundary on the basis of the fact that a difference between the position of an input subject detected and the position of the boundary of a display object is less than a threshold value.

Referring to FIG. 14, it can be seen that the tactile signal processing unit 160 according to the present embodiment generates a control signal for controlling a tactile feedback FB16 when the input subject F1 approaches boundaries of the display objects O1 and O2. According to the above-described function of the tactile signal processing unit 160 according to the present embodiment, a user can intuitively perceive the position of a display object even when the user does not gaze at the display unit 110, and it is possible to greatly improve the efficiency of an operation with respect to the display object.

In addition, the tactile signal processing unit 160 according to the present embodiment may generate a control signal for controlling a tactile feedback based on the above-described boundary position in a case in which an input strength is less than a threshold value. The tactile signal processing unit 160 generates a tactile feedback at a boundary of a deactivated display object, and thus it is possible to prevent the possibility of disturbing an input operation with respect to an activated display object.

Next, activation of a display object based on an input strength according to the present embodiment will be described. FIG. 15A is a diagram illustrating an example of the control of a display object and a tactile feedback based on a high input strength according to the present embodiment. FIG. 15A illustrates two display objects O1 and O2 and an input subject F1, similar to FIG. 14.

Here, focusing on the display object O1, it can be seen that the input subject F1 performs an input operation on the display object O1 with a high input strength Ph. Here, the above-described input operation may be a drag operation for turning a dial. In this case, the display control unit 140 according to the present embodiment may activate the display object O1 on the basis of an input strength exceeding a threshold value. The display control unit 140 according to the present embodiment activates a display object on the basis of an input strength, and thus it is possible to prevent a user's unintended erroneous operation.

In addition, the display control unit 140 according to the present embodiment may cancel display effects according to the display object O1 on the basis of an input strength exceeding a threshold value. That is, the display control unit 140 according to the present embodiment can cancel the translucent state or the transparent state of the display object O1. According to the above-described function of the display control unit 140 according to the present embodiment, it is possible to intuitively perceive effectiveness of a display object.

In addition, the tactile signal processing unit 160 according to the present embodiment has a function of generating a control signal for controlling a tactile feedback based on an input operation on the basis of the input operation being detected on a display object.

Referring to FIG. 15A, it can be seen that the tactile signal processing unit 160 according to the present embodiment generates a control signal for controlling a tactile feedback FB17 based on an input operation of an input subject F1 on a display object O1, on the basis of the input operation being detected.

Here, the tactile signal processing unit 160 may control a tactile feedback FB17 based on the input subject F1 performing an operation of turning a dial. Specifically, the tactile signal processing unit 160 can generate a control signal at a timing when the input operation exceeds a threshold value and the dial is turned (a timing when an imaging mode is changed). According to the above-described function of the tactile signal processing unit 160 according to the present embodiment, it is possible to increase the sense of reality that a user operates a display object and to intuitively perceive that processing based on an input operation has been executed.

In addition, the tactile signal processing unit 160 according to the present embodiment may generate a control signal for controlling a tactile feedback based on the above-described input operation in a case in which an input strength exceeds a threshold value. The tactile signal processing unit 160 generates a tactile feedback for only an input operation on an activated display object, so that a user can intuitively perceive effectiveness of the display object even when the user does not gaze at the display unit 110.

The control of the display control unit 140 and the tactile signal processing unit 160 based on an input operation for the dial type display object O1 has been described above. On the other hand, the display control unit 140 and the tactile signal processing unit 160 according to the present embodiment may execute the same processing without depending on the type of display object.

Focusing on a display object O2 in FIG. 15A, it can be seen that the display control unit 140 activates the display object O2 and cancels display effects according to the display object O2 on the basis of an input strength exceeding a threshold value.

In addition, the tactile signal processing unit 160 according to the present embodiment generates the tactile feedback FB17 based on an input operation on the basis of an input strength exceeding a threshold value. Here, the above-described input operation may be a pressing operation for pressing a shutter button. According to the tactile signal processing unit 160 according to the present embodiment, it is possible to control a tactile feedback based on an input operation, an input strength, and characteristics of a display object.

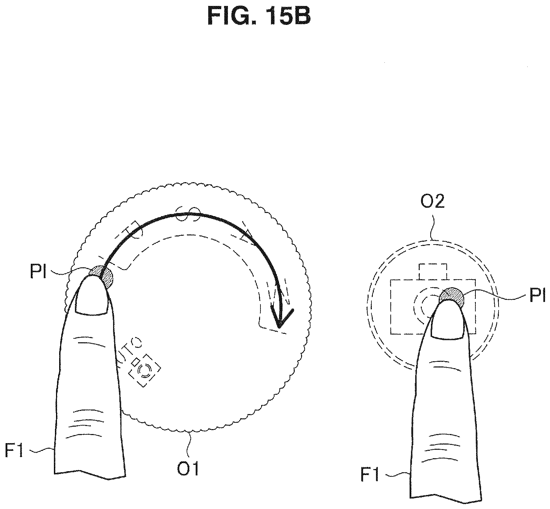

In addition, FIG. 15B is a diagram illustrating deactivation of a display object based on a low input strength. FIG. 15B illustrates display objects O1 and O2 and an input subject F1, similar to FIG. 15A. On the other hand, in FIG. 15B, an input operation of the input subject F1 is performed with a low input strength P₀, unlike FIG. 15A.

For this reason, the display objects O1 and O2 illustrated in FIG. 15B are maintained in an inactive state, and an input operation in the display objects O1 and O2 is not processed as an effective operation. In this manner, according to the information processing device 10 according to the present embodiment, it is possible to control a display object in accordance with an input strength and to prevent an erroneous operation and mischief due to an infant or the like.

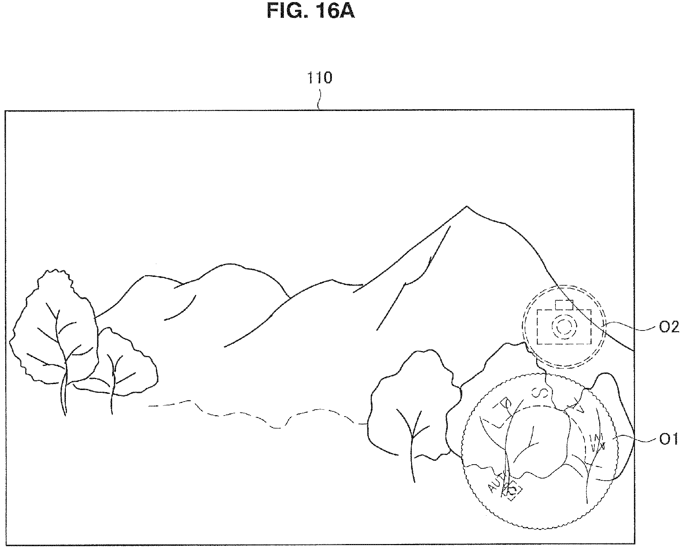

The control of a display object and a tactile feedback based on an input strength according to the present embodiment has been described above. Subsequently, a specific example of a user interface to be subjected to the above-described control will be described with reference to FIGS. 16A to 16C. Note that, in the following description using FIGS. 16A to 16C, a case in which the display unit 110 and the input unit 120 are integrally formed will be described as an example.

FIG. 16A is an example of a user interface displayed on the display unit 110. Here, the above-described user interface may be a user interface of a camera application. Note that FIG. 16A illustrates a state where an input subject F1 is not in contact with the input unit 120. For this reason, display objects O1 and O2 displayed on the user interface are deactivated and are in a translucent state.

In this manner, the display control unit 140 according to the present embodiment controls transmittance of a display object in an inactive state, so that it is possible to expect an effect of preventing the display object from interfering with a visual field when a user determines a subject.

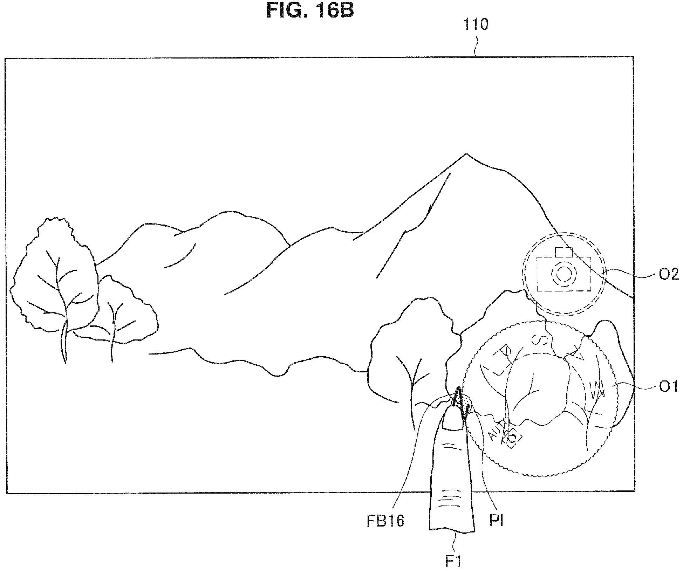

In addition, FIG. 16B illustrates a state where the input subject F1 performs an input operation on the input unit 120 with a low input strength P1. For this reason, the display objects O1 and O2 illustrated in FIG. 16B may be in an inactive state in succession to FIG. 16A. In this case, the tactile signal processing unit 160 according to the present embodiment can generate a tactile feedback FB16 based on the position of the boundary of the display object when the input subject F1 approaches the position of the boundary, as illustrated in FIG. 16B.

In this manner, the tactile signal processing unit 160 according to the present embodiment controls a tactile feedback based on the position of the boundary of the display object, so that the user can perceive the position of the display object by touch and can perform imaging while gazing at a subject.

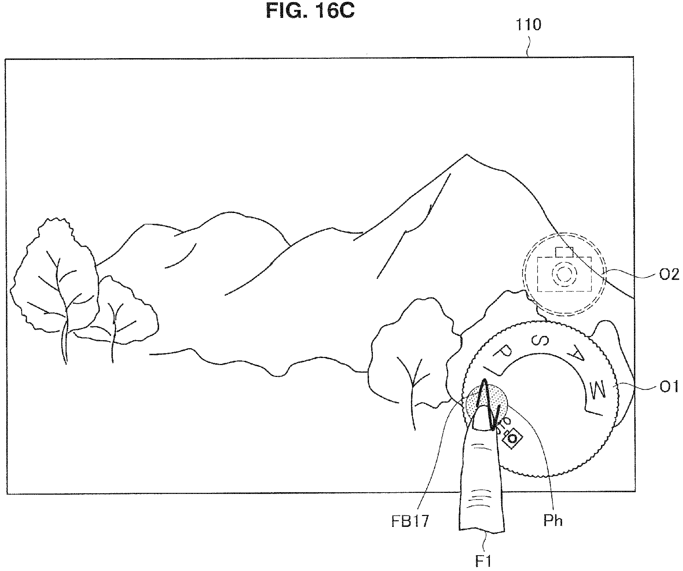

In addition, FIG. 16C illustrates a state where the input subject F1 performs an input operation on the display object O1 with a high input strength Ph. For this reason, the display object O1 illustrated in FIG. 16C is in an activated state. Further, in this case, the tactile signal processing unit 160 generates a tactile feedback FB17 based on an input operation of the input subject F1.

In this manner, the tactile signal processing unit 160 according to the present embodiment controls a tactile feedback based on an input operation on the display object, so that the user can intuitively perceive validity of the input operation without gazing at the display unit 110 and it is possible to greatly improve the efficiency of an operation with respect to the display object.

Note that, although the display object O2 is maintained in an inactive state in an example illustrated in FIG. 16C, the display control unit 140 according to the present embodiment may simultaneously set the related display object O2 to be in an active state on the basis of the fact that an input strength with respect to the display object O1 exceeds a threshold value.

### (Tactile feedback based on change in input strength)

The control of a display object and a tactile feedback based on an input strength according to the present embodiment has been described above. Although a case in which the tactile signal processing unit 160 generates a control signal on the basis of the degree of an input strength has been mainly described above, the function of the tactile signal processing unit 160 according to the present embodiment is not limited to such an example. The tactile signal processing unit 160 according to the present embodiment may generate a control signal for controlling a tactile feedback based on a change in an input strength.

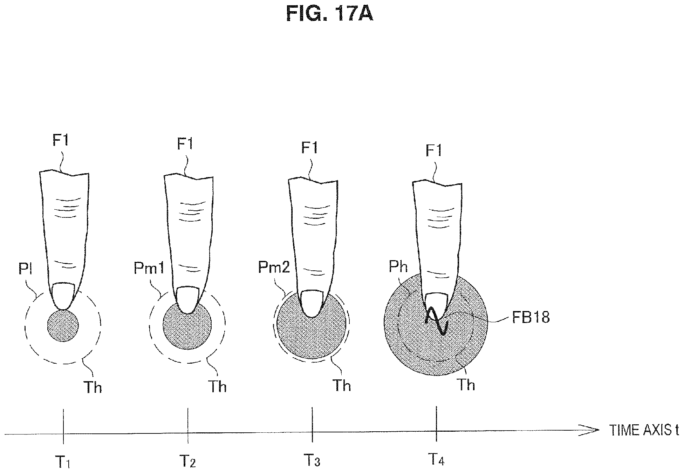

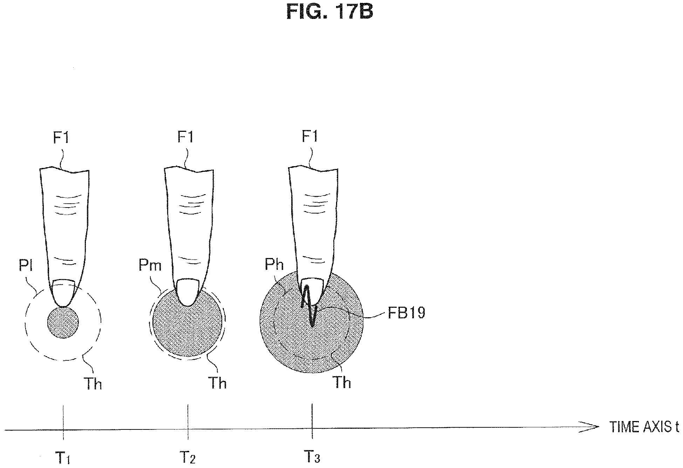

For example, the tactile signal processing unit 160 according to the present embodiment may generate a control signal for controlling a tactile feedback based on a change with time until an input strength exceeds a threshold value. FIGS. 17A and 17B are diagrams illustrating a tactile feedback based on a change with time until an input strength exceeds a threshold value, according to the embodiment.

FIGS. 17A and 17B are diagrams illustrating changes in an input strength according to an input operation of an input subject F1 in time series. In addition, a threshold value Th with respect to an input strength is indicated by a dotted line in FIGS. 17A and 17B.

Here, referring to FIG. 17A, an input operation of the input subject F1 is started at time T₁. In this case, the input subject F1 performs an input operation with a low input strength P₀ at time T₁.

Focusing on the subsequent times T₂ and T₃, the input subject F1 performs an input operation with each of intermediate input strengths Pm1 and Pm2, and thus it can be seen that an input strength according to an input operation becomes higher with the elapse of time.

Subsequently, focusing on time T₄, the input subject F1 performs an input operation with a high input strength Ph. In addition, it can be seen that the high input strength Ph exceeds a threshold value Th of an input strength. In this case, the tactile signal processing unit 160 according to the present embodiment may generate a control signal for controlling a tactile feedback FB18 on the basis of the input strength Ph exceeding the threshold value Th.

Further, in this case, the tactile signal processing unit 160 according to the present embodiment can generate a control signal based on a change with time until an input strength exceeds the threshold value Th. That is, the tactile signal processing unit 160 according to the present embodiment generates a control signal for controlling the tactile feedback FB18 based on an elapsed time from time T₁ to time T₄.

Next, a description will continue with reference to FIG. 17B. In FIG. 17B, an input operation of the input subject F1 is started at time T₁, similar to the case of FIG. 17A. In this case, the input subject F1 performs an input operation with a low input strength P₀ at time T₁, similar to the case of FIG. 17A.

Focusing on the subsequent time T₂, the input subject F1 performs an input operation with an intermediate input strength Pm, and thus it can be seen that an input strength according to an input operation becomes higher than that at time T₁.

Subsequently, focusing on time T₃, the input subject F1 performs an input operation with a high input strength Ph. In addition, it can be seen that the high input strength Ph exceeds a threshold value Th of an input strength. In this case, the tactile signal processing unit 160 according to the present embodiment may generate a control signal for controlling a tactile feedback FB19 on the basis of the input strength Ph exceeding the threshold value Th.

Further, in this case, similarly to the case of FIG. 17A, the tactile signal processing unit 160 according to the present embodiment can generate a control signal based on a change with time until an input strength exceeds the threshold value Th. That is, the tactile signal processing unit 160 according to the present embodiment generates a control signal for controlling the tactile feedback FB19 based on an elapsed time from time T₁ to time T₃. In this case, the tactile feedback FB19 may be a tactile feedback having a strength or frequency different from that of the tactile feedback FB18 illustrated in FIG. 17A.

In this manner, the tactile signal processing unit 160 according to the present embodiment can generate a control signal based not only on the degree of an input strength but also on a change in the input strength. According to the above-described function of the tactile signal processing unit 160 according to the present embodiment, it is possible to set a tactile feedback for an input operation in more various ways and to realize control based on the mode of an application.

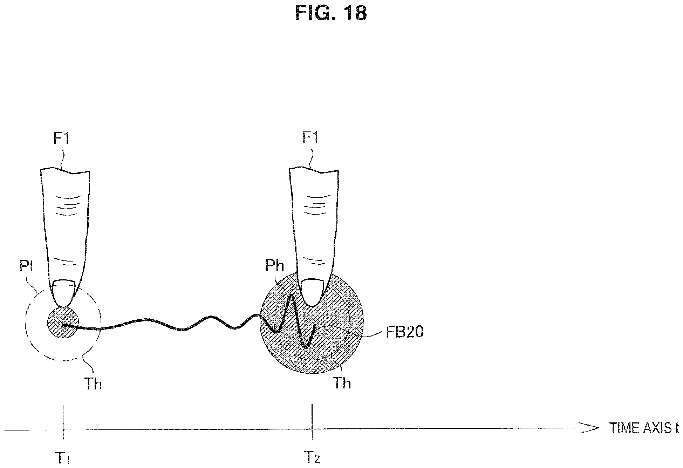

In addition, the tactile signal processing unit 160 according to the present embodiment can also generate a control signal for controlling a tactile feedback based on a difference between an input strength and a threshold value. FIG. 18 is a diagram illustrating a tactile feedback based on a difference between an input strength and a threshold value according to the present embodiment.

FIG. 18 illustrates changes in an input strength according to an input operation of an input subject F1 in time series. Further, in FIG. 18, a threshold value Th with respect to an input strength is indicated by a dotted line. In an example illustrated in FIG. 18, an input operation of the input subject F1 is started at time T₁. In this case, the input subject F1 performs an input operation with a low input strength P₀ at time T₁.

Next, focusing on time T₂, the input subject F1 performs an input operation with a high input strength Ph. In addition, it can be seen that the high input strength Ph exceeds a threshold value Th of an input strength.

Here, the tactile signal processing unit 160 according to the present embodiment may continuously generate a tactile feedback FB20 from time T₁ to time T₂, unlike the example illustrated in FIGS. 17A and 17B. Further, in this case, the tactile signal processing unit 160 according to the present embodiment can control a tactile feedback based on a difference between an input strength and a threshold value. More specifically, the tactile signal processing unit 160 according to the present embodiment can also perform control so that the strength of a tactile feedback is increased (or a frequency is increased) as an input strength approaches the threshold value and the strength or frequency of the tactile feedback is maximized when the input strength exceeds the threshold value.

According to the above-described function of the tactile signal processing unit 160 according to the present embodiment, a user can intuitively ascertain an input strength until an input operation reaches a threshold value, and it is possible to further increase the efficiency of an operation with respect to a display object.

### (Control of selection range based on input strength)

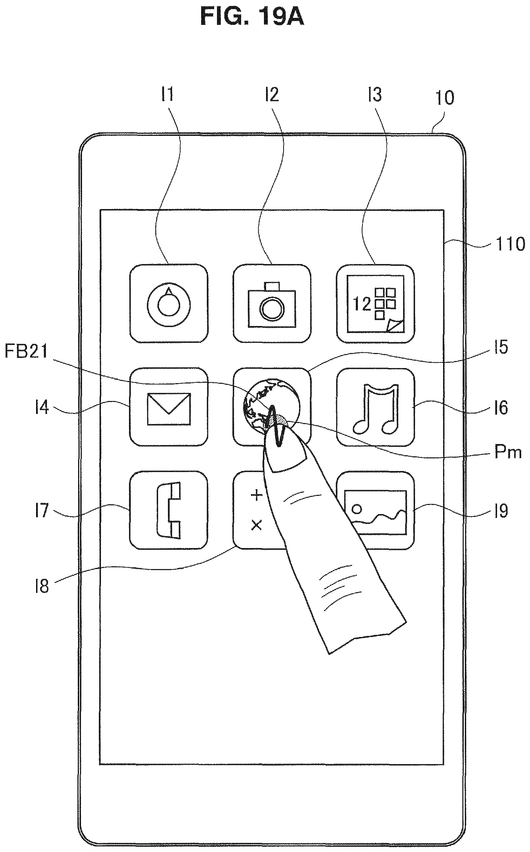

Next, control of a selection range based on an input strength according to the present embodiment will be described. The input processing unit 150 according to the present embodiment has a function of controlling the range of a display object to be selected, on the basis of an input strength according to an input operation. FIGS. 19A to 19D are diagrams illustrating control of a selection range based on an input strength according to the present embodiment.

FIG. 19A illustrates a plurality of icon-type display objects I1 to I9 displayed on the display unit 110 of the information processing device 10 according to the present embodiment, and an input subject F1. Referring to FIG. 19A, the input subject F1 performs an input operation on the display object I5 with an intermediate input strength Pm. Here, the above-described input operation may be a pressing operation on the display object I5. Further, in this case, the tactile signal processing unit 160 according to the present embodiment may generate a control signal for controlling a tactile feedback FB21 based on the above-described input operation and input strength.

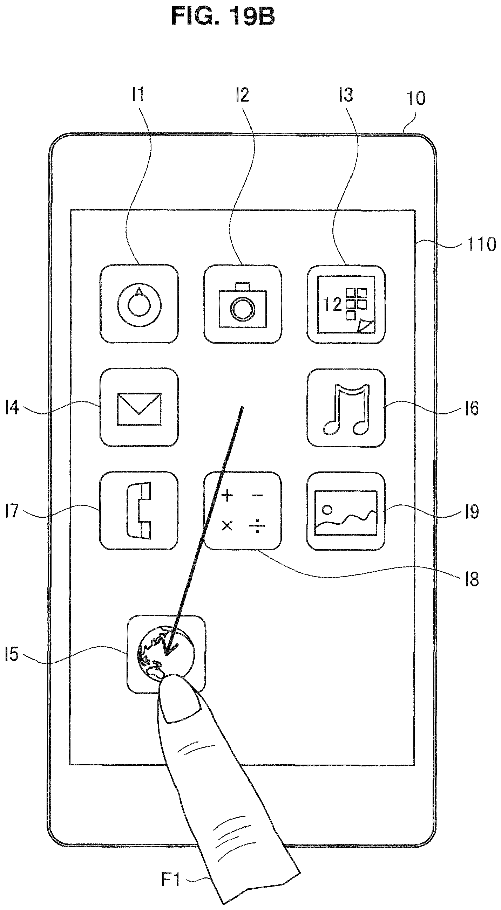

Subsequently, referring to FIG. 19B, the input subject F1 performs a drag operation on the display object I5. Note that, here, the above-described drag operation may be an input operation to be performed following the pressing operation illustrated in FIG. 19A.

In this case, the input processing unit 150 according to the present embodiment may perform processing so as to set a state where the display object I5 is selected, on the basis of the intermediate input strength Pm illustrated in FIG. 19A. In addition, the input processing unit 150 performs movement processing based on the subsequent drag operation on the display object I5 selected as described above. In this case, the display control unit 140 according to the present embodiment performs display control based on the movement processing of the input processing unit 150.

In this manner, the input processing unit 150 according to the present embodiment can control the range of a display object to be processed, on the basis of an input strength. In an example illustrated in FIGS. 19A and 19B, the input processing unit 150 can perform processing for setting a state where the display object I5 is selected, on the basis of the fact that the intermediate input strength Pm exceeds a threshold value necessary for a drag operation of a single display object.

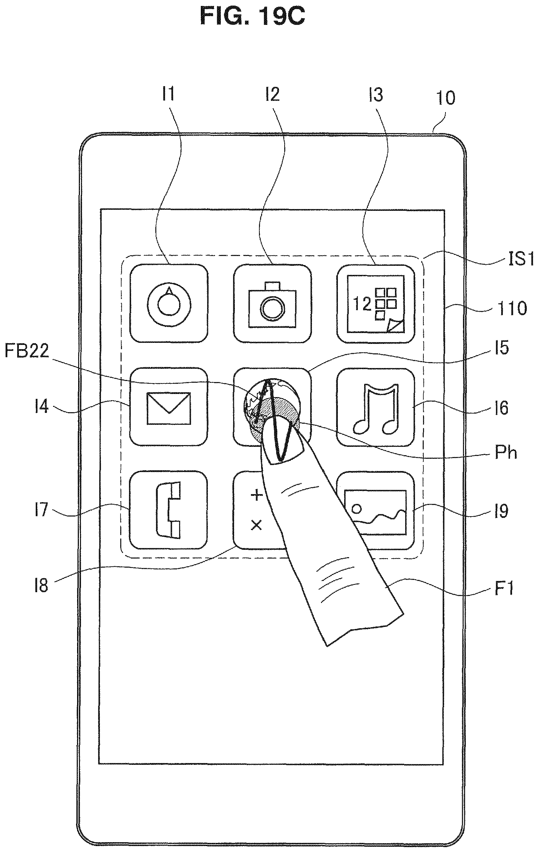

Next, a description will continue with reference to FIG. 19C. Similarly to FIG. 19A, FIG. 19C illustrates a plurality of icon-type display objects I1 to I9 displayed on the display unit 110 of the information processing device 10 according to the present embodiment, and an input subject F1. Referring to FIG. 19C, the input subject F1 performs an input operation on the display object I5 with a high input strength Ph. Here, the above-described input operation may be a pressing operation on the display object I5. Further, in this case, the tactile signal processing unit 160 according to the present embodiment may generate a control signal for controlling a tactile feedback FB22 based on the above-described input operation and input strength.

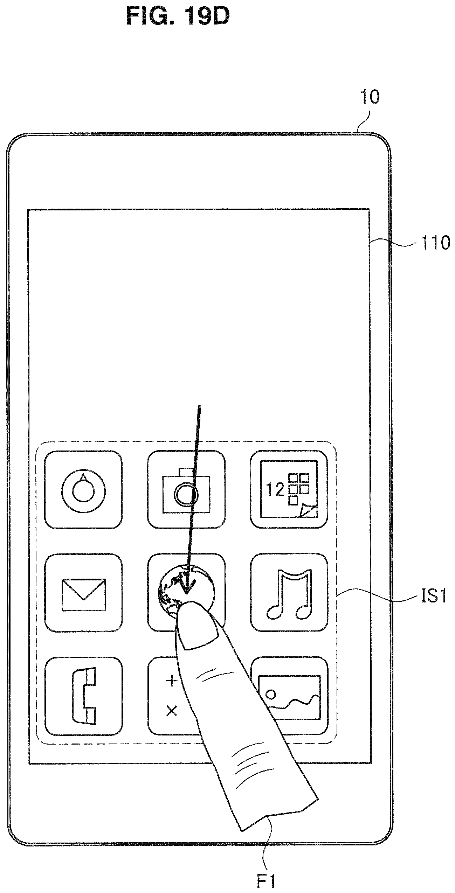

Subsequently, referring to FIG. 19D, the input subject F1 performs a drag operation toward the lower side of the display unit 110. Note that, here, the above-described drag operation may be an input operation performed following the pressing operation illustrated in FIG. 19C.

In this case, the input processing unit 150 according to the present embodiment may perform processing so as to set a state where a set IS1 including the display objects I1 to I9 is selected, on the basis of the high input strength Ph illustrated in FIG. 19C. In addition, the input processing unit 150 performs movement processing based on the subsequent drag operation on the set IS1 selected as described above. In this case, the display control unit 140 according to the present embodiment performs display control based on the movement processing of the input processing unit 150.

In this manner, the input processing unit 150 according to the present embodiment can extend the range of a display object to be processed, on the basis of an input strength exceeding a threshold value. In an example illustrated in FIGS. 19C and 19D, the input processing unit 150 can perform processing for setting a state where the display objects I1 to I9 are selected, on the basis of the fact that the high input strength Ph exceeds a threshold value necessary for a drag operation to be performed on the set IS1 of the display objects.

As described above with reference to FIGS. 19A to 19D, the input processing unit 150 according to the present embodiment can control the range of a display object to be processed, on the basis of an input strength. According to the above-described function of the input processing unit 150 according to the present embodiment, it is possible to reduce a burden on a user's input operation and to realize more efficient processing with respect to a display object.

Note that, in the above description using FIGS. 19A to 19D, a case in which the input processing unit 150 controls a selection range of two stages has been described as an example, but the control of a selection range according to the present embodiment is not limited to such an example. The input processing unit 150 according to the present embodiment can also control a selection range in a stepwise manner, on the basis of a plurality of threshold values.

### [2.3. Flow of processing performed by information processing device 10]

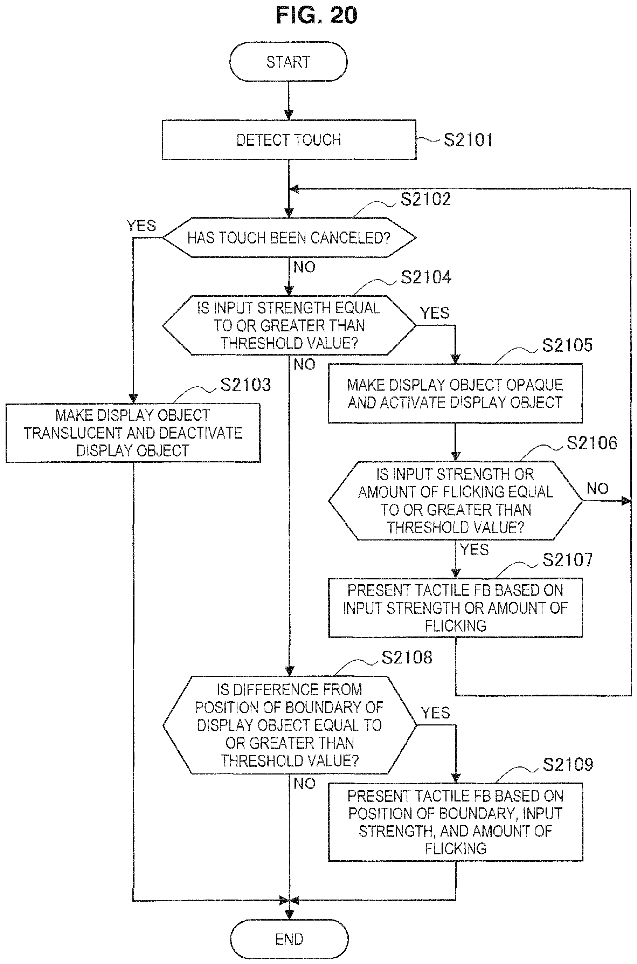

Next, a flow of processing performed by the information processing device 10 according to the present embodiment will be described. FIG. 20 is a flowchart illustrating a flow of processing performed by the information processing device 10 according to the present embodiment.

Referring to FIG. 20, first, the input unit 120 of the information processing device 10 according to the present embodiment detects a touch operation by an input subject (S2101).

Next, the input processing unit 150 according to the present embodiment determines whether or not the touch operation detected in step S2101 has been canceled (S2102). That is, the input processing unit 150 may determine whether or not an input operation performed by an input subject has been terminated.

Here, in a case in which the input processing unit 150 determines that the input operation has been terminated (S2102: YES), the display control unit 140 according to the present embodiment makes a display object disposed in a user interface translucent or transparent and deactivates the above-described display object (S2103). In addition, in this case, the tactile signal processing unit 160 according to the present embodiment may generate a control signal for controlling a tactile feedback based on the cancellation of the touch, that is, the termination of the input operation. In addition, the tactile presentation unit 130 according to the present embodiment may present the tactile feedback on the basis of the control signal generated above.

In addition, after the process of step S2103 is terminated, the information processing device 10 terminates a series of processes according to the control of the display object and the presentation of the tactile feedback.

On the other hand, in a case in which the input processing unit 150 determines that the input operation has not been terminated (S2102: NO), the input processing unit 150 subsequently determines whether or not an input strength according to an input operation is equal to or greater than a threshold value (S2104).

Here, in a case in which the input processing unit 150 determines that the input strength is equal to or greater than the threshold value (S2104: YES), the display control unit 140 according to the present embodiment cancels display effects of the display object according to the input operation, and activates the above-described display object (S2105). Further, in this case, the input processing unit 150 may set the range of the display object to be processed, on the basis of the input strength.

Next, the input processing unit 150 determines whether or not the input strength or the amount of flicking is equal to or greater than a threshold value (S2106).

Here, in a case in which the input processing unit 150 determines that the input strength or the amount of flicking is less than the threshold value (S2106: NO), the information processing device 10 according to the present embodiment returns to step S2102, and the subsequent processes may be repeatedly executed.

On the other hand, in a case in which the input processing unit 150 determines that the input strength or the amount of flicking is equal to or greater than the threshold value (S2106: YES), the tactile signal processing unit 160 according to the present embodiment generates a control signal for controlling a tactile feedback based on the input strength or the amount of flicking. In addition, the tactile presentation unit 130 according to the present embodiment presents a tactile feedback on the basis of the signal generated above (S2107).

Note that the information processing device 10 according to the present embodiment returns to step S2102 after the process of step S2107 is terminated, and the subsequent processes may be repeatedly executed.

On the other hand, in step S2104, in a case in which the input processing unit 150 determines that the input strength is not equal to or greater than the threshold value (S2104: NO), the input processing unit 150 subsequently determines whether or not a difference between the position of a detected input operation and the position of the boundary of the display object is equal to or greater than a threshold value (S2108).

Here, in a case in which the input processing unit 150 determines that a difference between the position of the detected input operation and the position of the boundary of the display object is equal to or greater than the threshold value (S2108: NO), the information processing device 10 according to the present embodiment terminates a series of processes according to the control of the display object and the presentation of the tactile feedback.

Here, in a case in which the input processing unit 150 determines that a difference between the position of the detected input operation and the position of the boundary of the display object is equal to or greater than the threshold value (S2108: YES), the tactile signal processing unit 160 according to the present embodiment generates a control signal for controlling a tactile feedback based on the above-described position of the boundary. In this case, the tactile signal processing unit 160 can also generate a control signal for controlling a tactile feedback based on the detected input strength, the amount of flicking, or the like. In addition, the tactile presentation unit 130 according to the present embodiment presents a tactile feedback on the basis of the control signal generated above (S2109).

In a case in which the process of step S2109 is terminated, the information processing device 10 according to the present embodiment terminates a series of processes according to the control of the display object and the presentation of the tactile feedback.

### <3. Hardware configuration example>

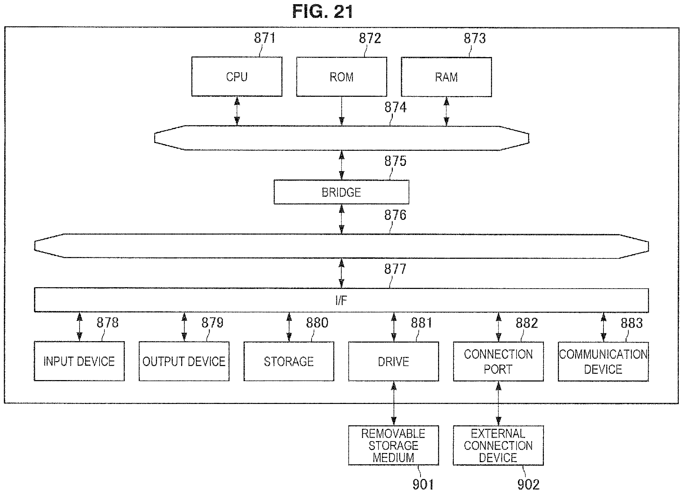

Next, a hardware configuration example of the information processing device 10 according to the present disclosure will be described. FIG. 21 is a block diagram illustrating the hardware configuration example of the information processing device 10 according to the present disclosure. With reference to FIG. 21, for example, the information processing device 10 according to the present disclosure includes a CPU 871, ROM 872, RAM 873, a host bus 874, a bridge 875, an external bus 876, an interface 877, an input device 878, an output device 879, a storage 880, a drive 881, a connection port 882, and a communication device 883. Note that, the hardware configuration illustrated here is an example. Some of the structural elements may be omitted. In addition, a structural element other than the structural elements illustrated here may be further added.

### (CPU 871)

The CPU 871 functions as an arithmetic processing device or a control device, for example, and controls entire operation or a part of the operation of each structural element on the basis of various programs recorded on the ROM 872, the RAM 873, the storage 880, or a removable recording medium 901.

### (ROM 872 and RAM 873)

The ROM 872 is a mechanism for storing a program to be loaded on the CPU 871, data used in an arithmetic operation, or the like. The RAM 873 temporarily or permanently stores, for example, a program to be loaded on the CPU 871, various parameters that arbitrarily changes in execution of the program, or the like.

### (Host bus 874, bridge 875, external bus 876, and interface 877)

The CPU 871, the ROM 872, and the RAM 873 are interconnected with each other, for example, via the host bus 874 capable of high-speed data transmission. On the other hand, the host bus 874 is connected, for example, via the bridge 875, to the external bus 876 having comparatively low data transmission speed. In addition, the external bus 876 is connected with various structural elements via the interface 877.

### (Input device 878)

For example, as the input device 878, a mouse, a keyboard, a touchscreen, a button, a switch, a lever, or the like is used. In addition, as the input device 878, a remote controller (hereinafter, referred to as a remote) capable of transmitting a control signal by using infrared or other radio waves may be used. In addition, the input device 878 according to the present disclosure includes a touch panel, a touch pad, or the like.

### (Output device 879)

The output device 879 is, for example, a display device such as a cathode ray tube (CRT), an LCD, or an organic EL, an audio output device such as a speaker or headphones, or a device that can visually or audibly notify a user of acquired information such as a printer, a mobile phone, or a facsimile. In addition, the output device 879 according the present disclosure includes various devices having a function of presenting a tactile feedback.

### (Storage 880)

The storage 880 is a device for storing various kinds of data. As the storage 880, for example, a magnetic storage device such as a hard disk drive (HDD), a semiconductor storage device, an optical storage device, a magneto-optical storage device, or the like is used.

### (Drive 881)

The drive 881 is a device for reading information recorded on the removable recording medium 901 and writing information on the removable recording medium 901. The removable storage medium 901 is, for example, a magnetic disk, an optical disk, a magneto-optical disk, a semiconductor memory, or the like.

### (Removable recording medium 901)

The removable recording medium 901 is, for example, a DVD medium, a Blu-ray (registered trademark) medium, an HD-DVD medium, various types of semiconductor storage media, or the like. Of course, the removable recording medium 901 may be, for example, an electronic device, an IC card on which a non-contact IC chip is mounted, or the like.

### (Connection port 882)

The connection port 882 is, for example, a port for connecting an external connection device 902 such as a Universal Serial Bus (USB) port, an IEEE934 port, a Small Computer System Interface (SCSI), an RS-232C port, or an optical audio terminal.

### (External connection device 902)

The external connection device 902 is, for example, a printer, a portable music player, a digital camera, a digital video camera, an IC recorder, or the like.

### (Communication device 883)

The communication device 883 is a communication device used for a connection to a network. The communication device 883 may be, for example, a communication card for a wired or wireless LAN, Bluetooth (registered trademark) or a wireless USB (WUSB), a rooter for optical communication, a rooter for an asymmetric digital subscriber line (ADSL), or a modem for various kinds of communication.

### <4. Summary>

As described above, one of features of the information processing device 10 according to the present disclosure is to generate a control signal for controlling a tactile feedback based on an input operation detected in a software keyboard. In addition, the information processing device 10 according to the present disclosure can generate a control signal for controlling a change of an input mode based on an input strength according to an input operation and a tactile feedback based on an input strength. According to such a configuration, a user can intuitively perceive validity of an operation in an input using a software keyboard.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above-described embodiment, a case in which only an input operation and a tactile feedback based on the input operation are presented has been described as an example, but the present technology is not limited to such an example. The information processing device 10 according to the present disclosure can also present, for example, a feedback using a sound, in addition to the above-described tactile feedback. In this case, the information processing device according to the present disclosure may further include a sound output unit and a sound output control unit, in addition to the configuration described in the above-described embodiment.

Further, the respective steps in the processing of the information processing device 10 in this specification are not necessarily executed in chronological order in accordance with the order illustrated in the flowcharts. In one example, the respective steps in the processing of the information processing device 10 can be processed in the order different from the order illustrated in the flowcharts, or can also be processed in parallel.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   an input processing unit that performs input processing on the basis of an input operation accompanied by character designation detected in a software keyboard; and
   a tactile signal processing unit that generates a control signal for controlling a tactile feedback based on the input operation,
   in which the input operation includes a flick operation.
(2) The information processing device according to (1),
   in which the tactile signal processing unit generates the control signal on the basis of a designated character being changed according to the input operation.
(3) The information processing device according to (1) or (2),
   in which the tactile signal processing unit generates the control signal on the basis of a fact that a determination value detected from the flick operation exceeds a threshold value, and
   the determination value includes at least any one of an amount of movement of the flick operation or a speed of the flick operation.
(4) The information processing device according to (3),
   in which the tactile signal processing unit generates the control signal based on a magnitude of the determination value.
(5) The information processing device according to (3) or (4),
   in which the tactile signal processing unit generates the control signal based on a difference between the determination value and the threshold value.
(6) The information processing device according to any of (1) to (5),
   in which the tactile signal processing unit generates the control signal on the basis of an input strength according to the input operation, and
   the input strength is based on at least one of pressing according to the input operation or a contact area between an input unit and an input subject.
(7) The information processing device according to (6),
   in which the tactile signal processing unit generates the control signal on the basis of the input strength exceeding a threshold value.
(8) The information processing device according to (6) or (7),
   in which the tactile signal processing unit generates the control signal on the basis of the input strength being less than a threshold value.
(9) The information processing device according to any of (6) to (8),
   in which the input processing unit changes a character input mode according to the input operation on the basis of the input strength.
(10) The information processing device according to (9),
   in which the input processing unit changes a set of character types to be input according to the input operation on the basis of the input strength.
(11) The information processing device according to (10),
   in which the input processing unit changes the set of character types on the basis of the input strength exceeding a threshold value.
(12) The information processing device according to any of (9) to (11),
   in which the input processing unit changes a speed of the input processing according to the input operation in accordance with the input strength.
(13) The information processing device according to (12),
   in which the input processing unit increases the speed of the input processing as the input strength becomes higher.
(14) The information processing device according to any of (9) to (13),
   in which the input processing unit changes an input character to be input according to the input operation, on the basis of the input strength.
(15) The information processing device according to (14),
   in which the input processing unit changes the input character on the basis of the input strength exceeding a threshold value.
(16) The information processing device according to any of (1) to (15),
   in which the tactile signal processing unit generates the control signal in accordance with a direction of the flick operation.
(17) The information processing device according to any of (1) to (16), further including:
   a tactile presentation unit that presents the tactile feedback.
(18) The information processing device according to any of (1) to (17), further including:
   a detection unit that detects the input operation.
(19) An information processing method including, by a processor:
   performing input processing on the basis of an input operation accompanied by character designation detected in a software keyboard; and
   generating a control signal for controlling a tactile feedback based on the input operation,
   in which the input operation includes a flick operation.
(20) A program causing a computer to function as an information processing device including
   an input processing unit that performs input processing on the basis of an input operation accompanied by character designation detected in a software keyboard, and
   a tactile signal processing unit that generates a control signal for controlling a tactile feedback based on the input operation,
   in which the input operation includes a flick operation.

### Reference Signs List

- 10: information processing device
- 110: display unit
- 120: input unit
- 130: tactile presentation unit
- 140: display control unit
- 150: input processing unit
- 160: tactile signal processing unit

## Claims

1. An information processing device comprising:
an input processing unit that performs input processing on a basis of an input operation accompanied by character designation detected in a software keyboard; and
a tactile signal processing unit that generates a control signal for controlling a tactile feedback based on the input operation,
wherein the input operation includes a flick operation.

2. The information processing device according to claim 1,
wherein the tactile signal processing unit generates the control signal on a basis of a designated character being changed according to the input operation.

3. The information processing device according to claim 1,
wherein the tactile signal processing unit generates the control signal on a basis of a fact that a determination value detected from the flick operation exceeds a threshold value, and
the determination value includes at least any one of an amount of movement of the flick operation or a speed of the flick operation.

4. The information processing device according to claim 3,
wherein the tactile signal processing unit generates the control signal based on a magnitude of the determination value.

5. The information processing device according to claim 3,
wherein the tactile signal processing unit generates the control signal based on a difference between the determination value and the threshold value.

6. The information processing device according to claim 1,
wherein the tactile signal processing unit generates the control signal on a basis of an input strength according to the input operation, and
the input strength is based on at least one of pressing according to the input operation or a contact area between an input unit and an input subject.

7. The information processing device according to claim 6,
wherein the tactile signal processing unit generates the control signal on a basis of the input strength exceeding a threshold value.

8. The information processing device according to claim 6,
wherein the tactile signal processing unit generates the control signal on a basis of the input strength being less than a threshold value.

9. The information processing device according to claim 6,
wherein the input processing unit changes a character input mode according to the input operation on a basis of the input strength.

10. The information processing device according to claim 9,
wherein the input processing unit changes a set of character types to be input according to the input operation on a basis of the input strength.

11. The information processing device according to claim 10,
wherein the input processing unit changes the set of character types on a basis of the input strength exceeding a threshold value.

12. The information processing device according to claim 9,
wherein the input processing unit changes a speed of the input processing according to the input operation in accordance with the input strength.

13. The information processing device according to claim 12,
wherein the input processing unit increases the speed of the input processing as the input strength becomes higher.

14. The information processing device according to claim 9,
wherein the input processing unit changes an input character to be input according to the input operation, on a basis of the input strength.

15. The information processing device according to claim 14,
wherein the input processing unit changes the input character on a basis of the input strength exceeding a threshold value.

16. The information processing device according to claim 1,
wherein the tactile signal processing unit generates the control signal in accordance with a direction of the flick operation.

17. The information processing device according to claim 1, further comprising:
a tactile presentation unit that presents the tactile feedback.

18. The information processing device according to claim 1, further comprising:
a detection unit that detects the input operation.

19. An information processing method comprising, by a processor:
performing input processing on a basis of an input operation accompanied by character designation detected in a software keyboard; and
generating a control signal for controlling a tactile feedback based on the input operation,
wherein the input operation includes a flick operation.

20. A program causing a computer to function as an information processing device including
an input processing unit that performs input processing on a basis of an input operation accompanied by character designation detected in a software keyboard, and
a tactile signal processing unit that generates a control signal for controlling a tactile feedback based on the input operation,
wherein the input operation includes a flick operation.
